# EUROPEAN PATENT SPECIFICATION

(11) **EP 4 335 265 B1**
(45) Date of publication and mention of the grant of the patent: **09.12.2026**
(21) Application number: 22832394.5
(22) Date of filing: 04.02.2022
(51) Int. Cl.: A01B 69/00, G06V 20/56

(54) **CROP ROW DETECTION SYSTEM, AGRICULTURAL MACHINE EQUIPPED WITH CROP ROW DETECTION SYSTEM, AND CROP ROW DETECTION METHOD**
ERNTEGUTREIHENERKENNUNGSSYSTEM, LANDWIRTSCHAFTLICHE MASCHINE MIT DEM ERNTEGUTREIHENERKENNUNGSSYSTEM UND ERNTEGUTREIHENERKENNUNGSVERFAHREN
SYSTÈME DE DÉTECTION DE RANGÉE DE CULTURE, MACHINE AGRICOLE ÉQUIPÉE D'UN SYSTÈME DE DÉTECTION DE RANGÉE DE CULTURE, ET PROCÉDÉ DE DÉTECTION DE RANGÉE DE CULTURE

(30) Priority: 29.06.2021 JP 2021107919
(43) Date of publication of application: 13.03.2024
(73) Proprietor: Kubota Corporation, Osaka-shi, Osaka 530-0011 (JP)
(72) Inventor: MIYASHITA, Shunsuke, Sakai-shi, Osaka 590-0823 (JP); TAMBO, Toru, Sakai-shi, Osaka 590-0823 (JP); NAGAO, Mitsuaki, Sakai-shi, Osaka 590-0823 (JP)
(74) Representative: Müller-Boré & Partner Patentanwälte PartG mbB
(86) International application number: PCT/JP2022/004547
(87) International publication number: WO 2023/276226

(56) References cited:
- EP-A1- 3 367 336
- JP-A- 2006 101 816
- JP-A- 2016 208 871
- JP-A- H0 620 031
- JP-A- H09 201 110
- JP-A- H09 224 417
- US-A1- 2007 001 096
- KEIJI HANAWA: "Study of Stereo Vision Processing Methods for Operating Assist of Agricultural Vehicles", IEEJ TRANSACTIONS ON ELECTRONICS, INFORMATION AND SYSTEMS, 1 April 2007 (2007-04-01), pages 513 - 520, XP093166535, Retrieved from the Internet <URL:https://www.jstage.jst.go.jp/article/ieejeiss/127/4/127_4_513/_article/-char/ja>
- OKAMOTO HIROSHI, SHUN-ICHI HATA, MUNEHIRO TAKAI: "Crop-Row Detector for Row-following Control Systems (part 1); Comparison and Evaluation of Detecting Systems", JOURNAL OF THE JAPANESE SOCIETY OF AGRICULTURAL MACHINERY, vol. 61, no. 6, 1 November 1999 (1999-11-01), pages 159 - 167, XP093018518, DOI: 10.11357/jsam1937.61.6_159
- OKAMOTO HIROSHI, SHUN-ICHI HATA, MUNEHIRO TAKAI: "Visual Sensor for Crop-Row Following Robot", LECTURE ABSTRACTS OF THE 58TH JAPANESE SOCIETY OF AGRICULTURAL MACHINERY, 1 April 1999 (1999-04-01), pages 231 - 231, XP093018519, DOI: 10.11357/jsam1937.61.Supplement_231
- PONNAMBALAM VIGNESH RAJA, BAKKEN MARIANNE, MOORE RICHARD J. D., GLENN OMHOLT GJEVESTAD JON, JOHAN FROM PÅL: "Autonomous Crop Row Guidance Using Adaptive Multi-ROI in Strawberry Fields", SENSORS, vol. 20, no. 18, 14 September 2020 (2020-09-14), pages 5249, XP093018520, DOI: 10.3390/s20185249

## Description

### TECHNICAL FIELD

The present invention relates to a crop row detection system, an agricultural machine having a crop row detection system, and a method of crop row detection.

### BACKGROUND ART

Research and development has been directed to the automation of work vehicles, such as tractors, to be used in fields. For example, work vehicles have been put to practical use which travel via automatic steering by utilizing a positioning system capable of precise positioning, e.g., GNSS (Global Navigation Satellite System). Work vehicles that automatically perform speed control as well as automatic steering have also been put to practical use.

Moreover, vision guidance systems are being developed which detect rows of crops (crop rows) or ridges in a field by using an imaging device such as a camera, and control the travel of a work vehicle along the detected crop rows or ridges.

Patent Document 1 discloses a work machine that travels along a ridge in cultivated land where crops are planted in ridges which are formed in rows. Patent Document 1 describes binarizing a raw image acquired by capturing cultivated land from obliquely above with an onboard camera, and thereafter generating a planar perspective projection image. In the technique disclosed in Patent Document 1, the planar perspective projection image is rotated to generate a number of rotated images with different orientations to detect work paths between ridges.

Okamoto Hiroshi, Shun-Ichi Hata, Munehiro Takai: "Crop-Row Detector for Row-following Control Systems (part 1); Comparison and Evaluation of Detecting Systems", Journal of the Japanese Society of Agricultural Machinery, vol. 61, no. 6, 1 November 1999 (1999-11-01), pages 159-167, XP093018518, DOI: 10.11357/jsam1937.61.6_159 describes a crop row detection sensor applicable to automatic row alignment during field crop management operations.

Okamoto Hiroshi, Shun-Ichi Hata, Munehiro Takai: "Visual Sensor for Crop-Row Following Robot", Lecture abstracts of the 58th Japanese Society of Agricultural Machinery, 1 April 1999 (1999-04-01), pages 231-231, XP093018519, DOI: 10.11357/jsam1937.61.Supplement_231 describes a crop row recognition sensor used to automatically guide a field management robot along crop rows.

Ponnambalam Vignesh Raja, Bakken Marianne, Moore Richard J. D., Glenn Omholt Gjevestad Jon, Johan From Pål: "Autonomous Crop Row Guidance Using Adaptive Multi-ROI in Strawberry Fields", Sensors, vol. 20, no. 18, 14 September 2020 (2020-09-14), page 5249, XP093018520, DOI: 10.3390/s20185249 describes a crop row guidance system by vision systems using a CNN-based segmentation combined with adaptive multi-ROI based crop fitting.

### CITATION LIST

### PATENT LITERATURE

[Patent Document 1] Japanese Laid-Open Patent Publication No. 2016-208871

### SUMMARY OF INVENTION

### TECHNICAL PROBLEM

In techniques of detecting crop rows or ridges by using an imaging device, the accuracy of detection may be degraded by disturbance factors such as daylighting conditions.

The present invention provides a crop row detection system, an agricultural machine having a crop row detection system, and a method of crop row detection that can solve such problems. The present invention is defined by the independent claims. Preferred examples are defined in the dependent claims.

General or specific aspects of various example preferred embodiments of the present disclosure may be implemented using a device, a system, a method, an integrated circuit, a computer program, a non-transitory computer-readable storage medium, or any combination thereof. The computer-readable storage medium may be inclusive of a volatile storage medium, or a non-volatile storage medium. The device may include a plurality of devices. In the case where the device includes two or more devices, the two or more devices may be disposed within a single apparatus, or divided over two or more separate apparatuses.

### ADVANTAGEOUS EFFECTS OF INVENTION

According to the present invention, deteriorations in detection accuracy due to disturbance factors such as daylighting conditions can be suppressed, whereby an enhanced robustness can be provided.

### BRIEF DESCRIPTION OF DRAWINGS

[FIG. **1****]** A diagram schematically showing how an imaging device that is mounted to an agricultural machine may image the ground surface.
[FIG. **2****]** A perspective view schematically showing a relationship among a body coordinate system **Σb** and a camera coordinate system **Σc** that are fixed to the agricultural machine and a world coordinate system **Σw** that is fixed to the ground surface.
[FIG. **3****]** A top view schematically showing a portion of a field in which a multiple crop rows are made on the ground surface.
[FIG. **4****]** A diagram schematically showing an example of an image that is acquired by the imaging device of the agricultural machine shown in FIG. **3****.**
[FIG. **5****]** A top view schematically showing a state where the position and orientation (angle in yaw directions) of the agricultural machine are adjusted.
[FIG. **6****]** A diagram showing an example of an image acquired by the imaging device of the agricultural machine in the state of FIG. **5****.**
[FIG. **7****]** A block diagram showing an example of a basic configuration of a crop row detection system according to a first embodiment of the present disclosure.
[FIG. **8****]** A block diagram schematically showing an example configuration of a processing device in the first embodiment of the present disclosure.
[FIG. **9****]** A monochromatic image corresponding to one frame of image, among time-series color images acquired by an onboard camera mounted on a tractor.
[FIG. **10****]** A diagram showing an enhanced image resulting from converting the RGB values of one frame of image among time-series color images RGB values into an excess green index (ExG=2×g-r-b).
[FIG. **11****]** A histogram of an excess green index (ExG) in the image of FIG. **10****.**
[FIG. **12****]** A diagram showing an example of a plan view image (overhead view image) being classified into first pixels (e.g., crop pixels) and second pixels (background pixels).
[FIG. **13****]** A perspective view schematically showing the relative locations between: each of a camera coordinate system **Σc1** and a camera coordinate system **Σc2**; and a reference plane **Re.**
[FIG. **14****]** A schematic diagram showing an example in which the direction of crop rows in a plan view image and the direction of scanning lines are parallel.
[FIG. **15****]** A diagram schematically showing an example of a total value histogram, as obtained with respect to the plan view image of FIG. **14****.**
[FIG. **16****]** A schematic diagram showing an example where the direction of crop rows and the direction of scanning lines intersect in a plan view image.
[FIG. **17****]** A diagram schematically showing an example of a total value histogram, as obtained with respect to the plan view image of FIG. **16****.**
[FIG. **18****]** A flowchart showing an example algorithm by which a processing device in an embodiment of the present disclosure determines edge lines of a crop row.
[FIG. **19****]** A diagram showing a total value histogram obtained from the plan view image of FIG. **12****.**
[FIG. **20****]** A block diagram showing processes that are executed by a processing device according to an embodiment of the present disclosure.
[FIG. **21****]** A diagram for describing an implementation in which a plan view image is split into a plurality of blocks.
[FIG. **22****]** A diagram schematically showing a relationship between positions of scanning lines and total values of index values for each of the blocks in FIG. **21****.**
[FIG. **23****]** A diagram showing an example of crop row centers in each of the blocks in FIG. **22** and approximation lines for the crop row centers.
[FIG. **24****]** A top view showing examples of edge lines of crop rows as determined from the approximation lines in FIG. **23****.**
[FIG. **25****]** A diagram for describing a method which, in the case where crop rows include portions that are bent in curve shapes, splits a whole or a part of the plan view image into a plurality of blocks, and determines the positions of edge lines for each of the plurality of blocks.
[FIG. **26****]** A diagram schematically showing a relationship between positions of scanning lines and total values of index values (histogram) for each of the blocks in FIG. **25****.**
[FIG. **27****]** A diagram showing an example of crop row centers in each of the blocks in FIG. **26** and approximation lines for the crop row centers.
[FIG. **28****]** A top view showing examples of edge lines of crop rows as determined based on the approximation curves in FIG. **27****.**
[FIG. **29****]** A perspective view showing an example appearance of an agricultural machine according to an embodiment of the present disclosure.
[FIG. **30****]** A side view schematically showing an example of the agricultural machine to which an implement is attached.
[FIG. **31****]** A block diagram showing an example of a schematic configuration of an agricultural machine and an implement.

### DESCRIPTION OF EMBODIMENTS

Hereinafter, preferred embodiments of the present disclosure will be described more specifically. Note however that unnecessarily detailed descriptions may be omitted. For example, detailed descriptions on what is well known in the art or redundant descriptions on what is substantially the same configuration may be omitted. This is to avoid lengthy description, and facilitate the understanding of those skilled in the art. The accompanying drawings and the following description, which are provided by the present inventors so that those skilled in the art can sufficiently understand the present disclosure, are not intended to limit the scope of claims. In the following description, component elements having identical or similar functions are denoted by identical reference numerals.

The following preferred embodiments are only exemplary, and the technique according to the present disclosure is not limited to the following preferred embodiments. For example, numerical values, shapes, materials, steps, and orders of steps, layout of a display screen, etc., that are indicated in the following preferred embodiments are only exemplary, and admit of various modifications so long as it makes technological sense. Any one implementation may be combined with another so long as it makes technological sense to do so.

As used in the present disclosure, an "agricultural machine" broadly includes any machine that performs basic tasks of agriculture, e.g., "tilling", "planting", and "harvesting", in fields. An agricultural machine is a machine that has a functionality and structure to perform agricultural operations such as tilling, seeding, preventive pest control, manure spreading, planting of crops, or harvesting for the ground surface within a field. Such agricultural work, tasks, or operations may be referred to as "groundwork", or simply as "work", "tasks", or "operations". An agricultural machine does not need to possess traveling equipment for itself to move, but may travel by being attached to or towed by another vehicle that possesses traveling equipment. Not only does a work vehicle, such as a tractor, function as an "agricultural machine" by itself alone, but an implement that is attached to or towed by a work vehicle and the work vehicle may as a whole function as one "agricultural machine". Examples of agricultural machines include tractors, vehicles for crop management, vegetable transplanters, mowers, and field-moving robots.

### (Embodiment 1)

A crop row detection system and a method of crop row detection according to an illustrative first embodiment of the present disclosure will be described.

A crop row detection system according to the present embodiment includes an imaging device to be mounted to an agricultural machine in use. The imaging device is fixed to an agricultural machine so as to image the ground surface to be traveled by the agricultural machine, and to acquire time-series color images containing at least a portion of the ground surface.

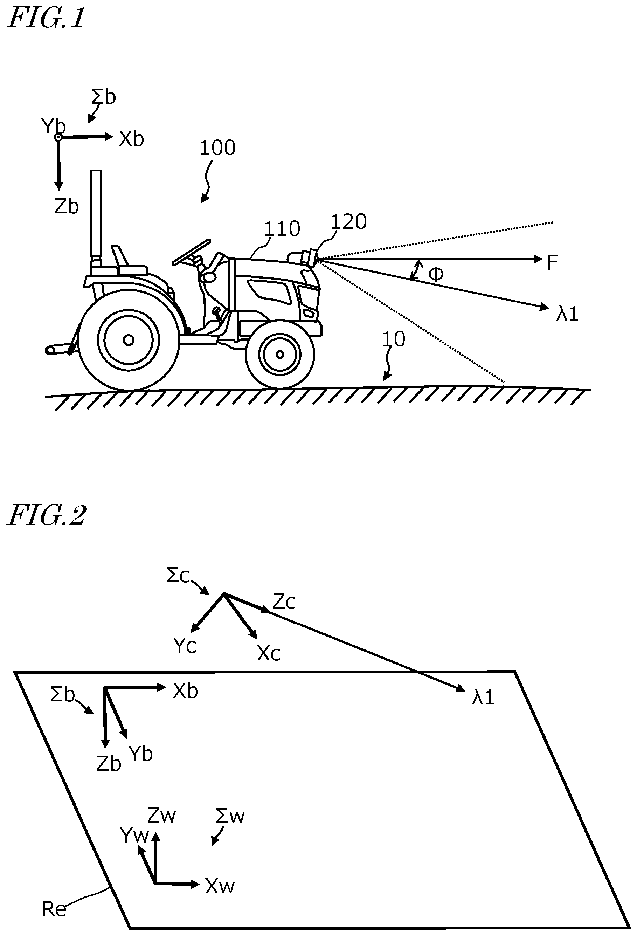

FIG. **1** schematically shows how an imaging device **12** that is mounted to an agricultural machine **100** such as a tractor or a vehicle for crop management may image the ground surface **10,** for example. In the example of FIG. **1****,** the agricultural machine **100** includes a vehicle body **110** that is capable of traveling, and the imaging device **120** is fixed to the vehicle body **110.** For referencing sake, FIG. **1** shows a body coordinate system **Σb** having an Xb axis, a Yb axis, and a Zb axis that are orthogonal to one another. The body coordinate system **Σb** is a coordinate system that is fixed to the agricultural machine **100,** and the origin of the body coordinate system **Σb** may be set near the centroid of the agricultural machine **100,** for example. In the figure, for ease of viewing, the origin of the body coordinate system **Σb** is illustrated as lying external to the agricultural machine **100.** In the body coordinate system **Σb** according to the present disclosure, the Xb axis coincides with the traveling direction (direction of arrow **F)** when the agricultural machine **100** is traveling straight. When viewing from the coordinate origin in the positing direction along the Xb axis, the Yb axis coincides with the directly right direction, and the Zb axis coincides with the vertically downward direction.

The imaging device **120** is, for example, an onboard camera that includes a CCD (Charge Coupled Device) or a CMOS (Complementary Metal Oxide Semiconductor) image sensor. The imaging device **120** according to the present embodiment is a monocular camera that is capable of capturing motion pictures at a frame rate of 3 frames/second (fps: frames per second) or above, for example.

FIG. **2** is a perspective view schematically showing a relationship among the aforementioned body coordinate system **Σb**, a camera coordinate system **Σc** of the imaging device **120,** and a world coordinate system **Σw** that is fixed to the ground surface **10.** The camera coordinate system **Σc** has an Xc axis, a Yc axis, and a Zc axis that are orthogonal to one another, whereas the world coordinate system **Σw** has an Xw axis, a Yw axis, and a Zw axis that are orthogonal to one another. In the example of FIG. **2****,** the Xw axis and the Yw axis of the world coordinate system **Σw** are on a reference plane **Re** that extends along the ground surface **10.**

The imaging device **120** is mounted at a predetermined position of the agricultural machine **100** so as to face in a predetermined direction. Therefore, the position and orientation of the camera coordinate system **Σc** with respect to the body coordinate system **Σb** are fixed in a known state. The Zc axis of the camera coordinate system **Σc** is on the camera optical axis **λ1**. In the illustrated example, the camera optical axis **λ1** is inclined from the traveling direction **F** of the agricultural machine **100** toward the ground surface **10,** with an angle of depression **Φ** that is greater than 0°. The traveling direction **F** of the agricultural machine **100** is schematically parallel to the ground surface **10** along which the agricultural machine **100** is traveling. The angle of depression **Φ** may be set to a range of e.g. not less than 0° and not more than 60°. In the case where the position at which the imaging device **120** is mounted is close to the ground surface **10,** the orientation of the camera optical axis **λ1** may be set so that the angle of depression **Φ** has a negative value, that is, a positive angle of elevation.

When the agricultural machine **100** is traveling on the ground surface **10,** the body coordinate system **Σb** and the camera coordinate system **Σc** translate relative to the world coordinate system **Σw**. If the agricultural machine **100** rotates or swings in directions of pitch, roll, and yaw during travel, the body coordinate system **Σb** and the camera coordinate system **Σc** may rotate relative to the world coordinate system **Σw**. In the following description, for simplicity, it is assumed that the agricultural machine **100** does not rotate in pitch and roll directions and that the agricultural machine **100** moves essentially parallel to the ground surface **10.**

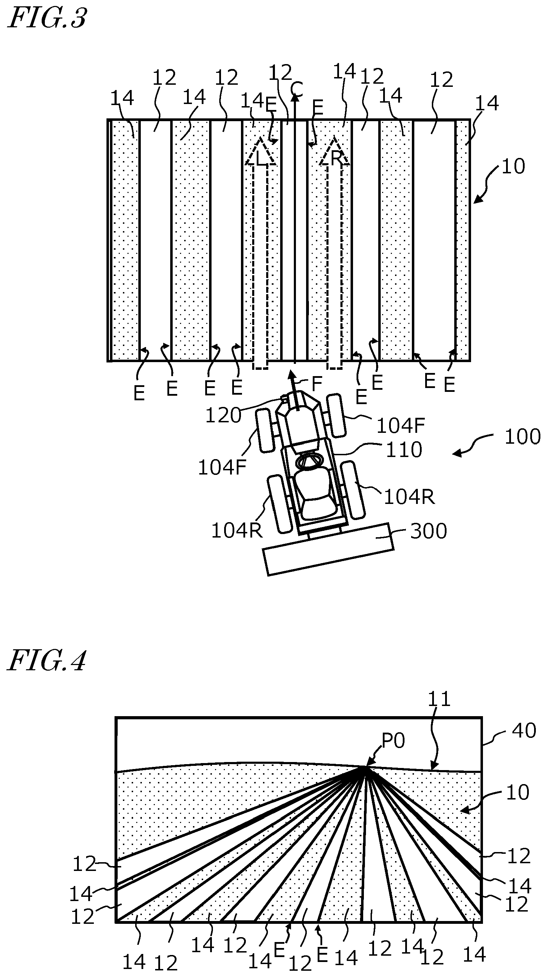

FIG. **3** is a top view schematically showing a portion of a field in which a multiple crop rows **12** are made on the ground surface **10.** A crop row **12** is a row that is formed as crops are continuously planted on the ground surface **10** of the field in one direction. In other words, a crop row **12** is an aggregation of crops that are planted in a ridge of the field. Thus, because each individual crop row **12** is a row that is created by an aggregation of crops that have been planted in the field, strictly speaking, the shape of a crop row may be complex depending on the shapes of crops and the arrangement of crops. The width of the crop row **12** changes with crop growth.

Between adjacent crop rows **12,** a belt-shaped intermediate region **14,** in which no crops have been planted, exists. In between two adjacent crop rows **12,** each intermediate region **14** is a region that is interposed between two opposing edge lines **E.** In the case where multiple crops are planted for one ridge in a width direction of the ridge, multiple crop rows **12** will be formed upon the one ridge. In other words, multiple crop rows **12** will be formed within the width of the ridge. In such a case, among the multiple crop rows **12** that are formed on the ridge, an edge line **E** of the crop row **12** that is located at an end of the width direction of the ridge serves as a delineator of an intermediate region **14.** In other words, an intermediate region **14** lies between the edge lines **E** of crop rows **12** that are located at ends of ridges along the width direction, among the edge lines **E** of multiple crop rows **12.**

Since an intermediate region **14** functions as a region (work path) through which the wheels of the agricultural machine **100** may pass, an "intermediate region" may be referred to as a "work path".

In the present disclosure, an "edge line" of a crop row means a reference line segment (which may also include a curve) for defining a target path for an agricultural machine to travel. Such reference line segments may be defined as both ends of a belt-like region (work path) through which the wheels of the agricultural machine are allowed to pass. The specific method of determining the "edge lines" of a crop row will be described later.

FIG. **3** schematically depicts an agricultural machine **100** that is about to enter into a field in which crop rows **12** are made. The agricultural machine **100** includes right and left front wheels **104F** and right and left rear wheels **104R** as traveling equipment, and is towing an implement **300.** The front wheels **104F** are the wheels responsible for steering.

In the example of FIG. **3****,** thick broken-lined arrows **L and R** are indicated for the respective work paths **14** that are located on opposite sides of a crop row **12** in the middle. When the agricultural machine **100** travels on a target path that is indicated by a solid-lined arrow **C,** the front wheels **104F** and the rear wheels **104R** of the agricultural machine **100** are expected to move along the arrows **L and R** in the work paths **14,** so as not to step on the crop row **12.** In the present embodiment, because the edge lines **E** of the crop row **12** can be detected by using the imaging device **120** mounted to the agricultural machine **100,** it is possible to control the steering and travel of the agricultural machine **100** so that the front wheels **104F** and the rear wheels **104R** will move along arrows **L and R** in the work paths **14.** Controlling the steering and travel of the agricultural machine **100** based on the edge lines **E** of the crop row in this manner may be referred to as "row-following control".

FIG. **4** is a diagram schematically showing an example of an image **40** that is acquired by the imaging device **120** of the agricultural machine **100** shown in FIG. **3****.** Theoretically, the multiple crop rows **12** and intermediate regions (work paths) **14** extending in parallel on the ground surface **10** intersect at a vanishing point **P0** on the horizon **11.** The reason why the vanishing point **P0** is located in a right-hand region of the image **40** is that, as shown in FIG. **3****,** the traveling direction **F** of the agricultural machine **100** is inclined from the direction in which the crop rows **12** extend (a direction parallel to arrow **C).**

In the present embodiment, by a method described below, even if the daylighting conditions or the growth state of crops changes, it is possible to accurately detect the crop rows **12** from such an image **40** and determine edge lines **E** of the crop rows **12.** Then, based on the edge lines **E,** a path in which the agricultural machine **100** should proceed (target path) can be appropriately generated. As a result, through automatic steering, it becomes possible to control the travel of the agricultural machine **100** so that the front wheels **104F** and the rear wheels **104R** of the agricultural machine **100** will move along arrows **L and R** within the work paths **14** (row-following control). Through such row-following control, a precise automatic steering that is adapted to the state of growth of crops can be achieved which cannot be attained by automatic steering techniques that utilize GNSS or other positioning systems.

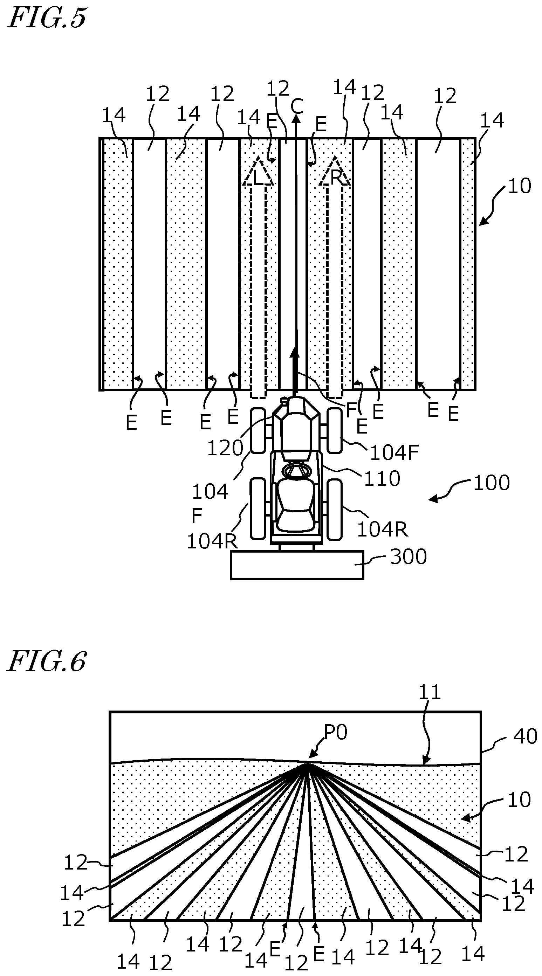

FIG. **5** is a top view schematically showing a state where the agricultural machine **100** is steered to reduce the positional error with respect to a target path (arrow **C),** thereby adjusting the position and orientation (angle in yaw directions) of the agricultural machine **100.** FIG. **6** is a diagram showing an example of an image **40** acquired by the imaging device **120** of the agricultural machine **100** in such a state. The front wheels **104F** and the rear wheels **104R** of the agricultural machine **100** in the state of FIG. **5** are respectively located on lines in work paths **14** indicated by arrow **L** and arrow **R.** When the agricultural machine **100** travels along a target path **C** indicated by central arrow **C,** the automatic steering device in the agricultural machine **100** controls the steering angles of the wheels responsible for steering so that the front wheels **104F** and the rear wheels **104R** will not mistrack from the work paths **14.**

Hereinafter, the configuration and operation of a crop row detection system according to an embodiment of the present disclosure will be described in detail.

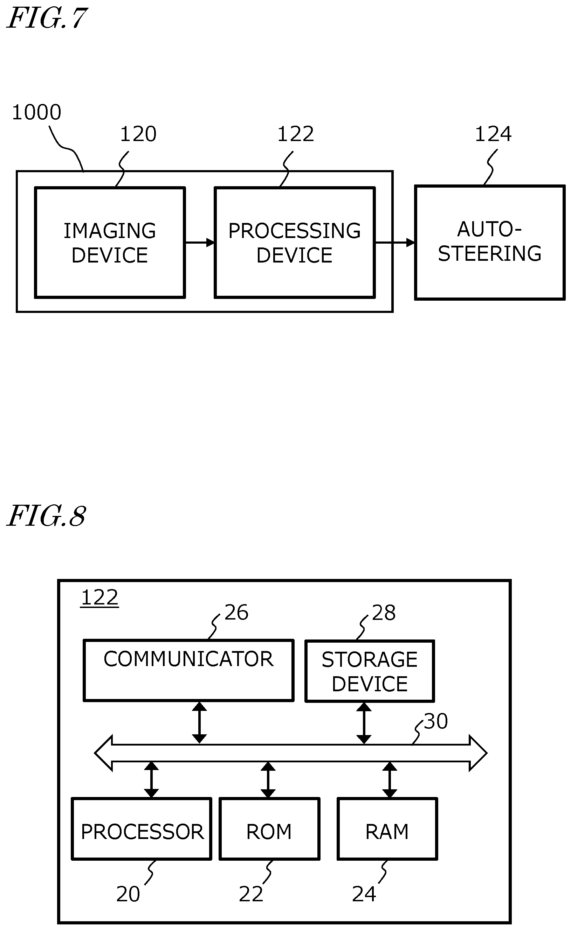

As shown in FIG. **7****,** a crop row detection system **1000** according to the present embodiment includes: the aforementioned imaging device **120;** and a processing device **122** which performs image processing for time-series color images that are acquired from the imaging device **120.** The processing device **122** may be connected to an automatic steering device **124** which is included in the agricultural machine **100,** for example. The automatic steering device **124** is included in a self-driving device that controls the travel of the agricultural machine **100,** for example.

The processing device **122** can be implemented by an electronic control unit (ECU) for image recognition. The ECU is a computer for onboard use. The processing device **122** is connected to the imaging device **120** via serial signal lines, e.g., a wire harness, so as to receive image data that is output from the imaging device **120.** A portion of the image recognition processing that is performed by the processing device **122** may be performed inside the imaging device **120** (inside a camera module).

FIG. **8** is a block diagram showing an example hardware configuration of the processing device **122.** The processing device **122** includes a processor **20,** a ROM (Read Only Memory) **22,** a RAM (Random Access Memory) **24,** a communicator **26,** and a storage device **28.** These component elements are connected to one another via buses **30.**

The processor **20** is a semiconductor integrated circuit, and referred to also as a central processing unit (CPU) or a microprocessor. The processor **20** may include an image processing unit (GPU). The processor **20** consecutively executes a computer program describing predetermined instructions, which is stored in the ROM **22,** to realize processing that is needed for the crop row detection according to the present disclosure. A whole or a part of the processor **20** may be an FPGA (Field Programmable Gate Array), an ASIC (Application Specific Integrated Circuit), or an ASSP (Application Specific Standard Product) in which a CPU is mounted.

The communicator **26** is an interface for performing data communication between the processing device **122** and an external computer. The communicator **26** can perform wired communication based on a CAN (Controller Area Network) or the like, or wireless communication complying with the Bluetooth (registered trademark) standards and/or the Wi-Fi (registered trademark) standards.

The storage device **28** is able to store data of images acquired from the imaging device **120** or images which are under processing. Examples of the storage device **28** include a hard disk drive and a non-volatile semiconductor memory.

The hardware configuration of the processing device **122** is not limited to the above examples. A whole or a part of the processing device **122** does not need to be mounted on the agricultural machine **100.** By utilizing the communicator **26,** one or more computers located outside the agricultural machine **100** may be allowed to function as a whole or a part of the processing device **122.** For example, a server computer that is connected to a network may function as a whole or a part of the processing device **122.** On the other hand, a computer mounted in the agricultural machine **100** may perform all functions that are required of the processing device **122.**

In the present embodiment, such a processing device **122** acquires time-series color images from the imaging device **120,** and performs operations S1, S2 and S3 below.
(S1) from time-series color images, generate an enhanced image in which the color of a crop row for detection is enhanced.
(S2) from the enhanced image, generate a plan view image as viewed from above the ground surface, the plan view image being classified into first pixels of which a color index value for the crop row is equal to or greater than a threshold and second pixels of which this index value is below the threshold.
(S3) based on the index values of the first pixels, determine the positions of edge lines of the crop row.

Hereinafter, specific examples of operations S1, S2 and S3 will be described in detail.

The time-series color images are an aggregation of images that are chronologically acquired by the imaging device **120** through imaging. Each image is composed of a frame-by-frame group of pixels. For example, when the imaging device **120** outputs images at a frame rate of 30 frames/second, the processing device **122** is able to acquire new images with a period of about 33 milliseconds. As compared to the speed of a common automobile that travels on public roads, the agricultural machine **100,** such as a tractor, travels in a field at a speed which is relatively low, e.g., about 10 kilometers per hour or lower. In the case of 10 kilometers per hour, a distance of about 6 centimeters is travelled in about 33 milliseconds. Therefore, the processing device **122** may acquire images with a period of e.g. about 100 to 300 milliseconds, and does not need to process every frame of image captured by the imaging device **120.** The period with which images to be processed by the processing device **122** are acquired may be automatically changed by the processing device **122** in accordance with the traveling speed of the agricultural machine **100.**

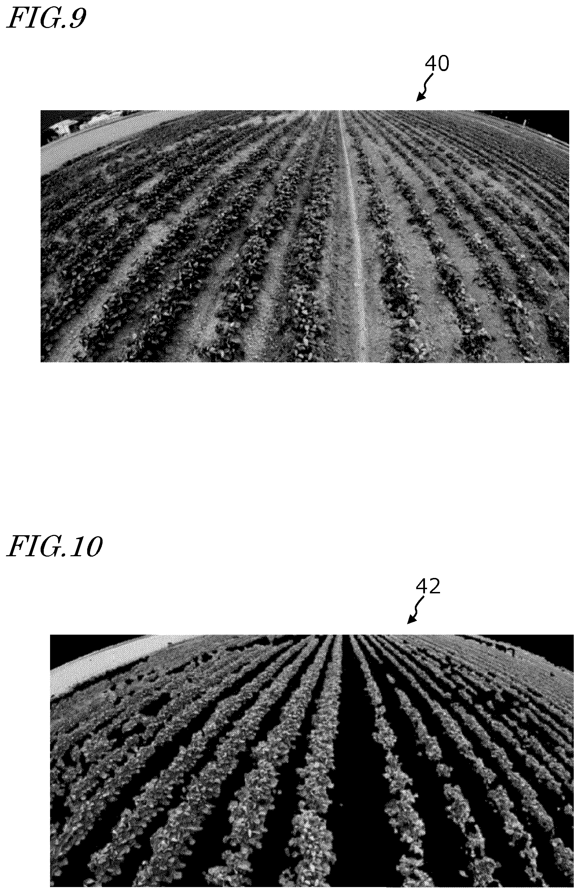

FIG. **9** is an image corresponding to one frame of image **40,** among time-series color images that have been acquired by an imaging device mounted on the agricultural machine (which in this example is a monocular camera). Rows of crops (crop rows) appear in the image of FIG. **9****,** which are planted in the form of rows on the ground surface of a field. In this example, the rows of crops are arranged essentially in parallel and at equal intervals on the ground surface, such that the camera optical axis of the imaging device is in the traveling direction of the agricultural machine. As described earlier, the camera optical axis does not need to be parallel to the traveling direction of the agricultural machine, but may meet the ground surface frontward of the traveling direction of the agricultural machine. The mounted position of the imaging device is not limited to this example. In the case where a plurality of imaging devices are mounted to the agricultural machine, some of the imaging device may have their camera optical axes oriented in an opposite direction to the traveling direction, or in a direction intersecting the traveling direction.

In operation S1, based on time-series color images that have been acquired from the imaging device **120,** the processing device **122** in FIG. **7** generates an image (enhanced image) in which the color of a crop row for detection is enhanced. Crops perform photosynthesis with sunlight (white light), and therefore contain chlorophyll. Chlorophyll has a lower optical absorption rate for green than for red or blue. Therefore, the spectrum of sunlight that is reflected by a crop shows a relatively high value in the green wavelength range, as compared to the spectrum of sunlight that is reflected from the soil surface. As a result, the crop color generally contains plenty of green components, and thus a typical example of the "color of the crop row" is green. However, as will be described below, the "color of the crop row" is not limited to green.

The image sensor in the imaging device **120** includes a multitude of photodetection cells that are arranged in rows and columns. Each individual photodetection cell corresponds to one of the pixels that constitute an image, and includes an R subpixel to detect the intensity of red light, a G subpixel to detect the intensity of green light, and a B subpixel to detect the intensity of blue light. The light outputs to be detected by the R subpixel, the G subpixel, and the B subpixel of each photodetection cell may be referred to as an R value, a G value, and a B value, respectively. Hereinafter, an R value, a G value, and a B value may be collectively referred to as "pixel values" or "RGB values". By using an R value, a G value, and a B value, it is possible to define a color based on coordinate values within an RGB color space.

In the case where the color of a crop row for detection is green, an enhanced image in which the color of a crop row is enhanced is an image resulting from: converting the RGB values of each pixel of a color image acquired by the imaging device into pixel values having a relatively large weight on the G value. Such pixel value conversion for generating an enhanced image may be defined as "(2×G value-R value-B value)/(R value+G value +B value)", for example. Herein, the (R value+G value +B value) in the denominator is a factor for normalization. Hereinafter, normalized RGB values will be referred to as rgb values, which are defined as: r=R value/ (R value+G value+B value); g=G value/(R value+G value +B value); and b=B value/(R value+G value +B value). Note that "2×g-r-b" is called an excess green index (ExG: Excess Green Index).

FIG. **10** is a diagram showing an enhanced image **42** resulting from converting the RGB values of the image of FIG. **9** into "2×g-r-b". Through this conversion, in the image **42** of FIG. **10****,** any pixel whose "r+b" is smaller than g is displayed brighter, and any pixel whose "r+b" is larger than g is displayed darker. Through this conversion, an image (enhanced image) **42** in which the color of a crop row for detection (i.e., "green" in this example) is enhanced is obtained. Any pixel which is relatively bright in the image of FIG. **10** is a pixel having a relatively large green component, and belongs to the crop region.

As the "color index value" regarding which the color of the crop is to be enhanced, any index other than the excess green index (ExG) may also be used, e.g., a green red vegetation index (G value-R value)/(G value +R value). In the case where the imaging device can also function as an infrared camera, NDVI (Normalized Difference Vegetation Index) may be used as the "color index value for the crop row".

There may be cases where each crop row is covered by a sheet called "mulch" (mulching sheet). In such cases, the "color of the crop row" is the "color of objects that are arranged in rows covering the crops". Specifically, when the sheet color is black, which is an achromatic color, the "color of the crop row" means "black". When the sheet color is red, the "color of the crop row" means "red". Thus, the "color of the crop row" may mean not only the color of the crops themselves, but also the color of the region defining the crop row (i.e., a color that is distinguishable from the color of the soil surface).

The generation of an enhanced image in which the "color of the crop row" is enhanced may utilize conversion from an RGB color space into an HSV color space. An HSV color space is a color space that is constituted by the three components of hue, saturation, and value. Using color information obtained by converting from an RGB color space into an HSV color space makes it possible to detect a "color" with low saturation, such as black or white. In the case of utilizing an OpenCV library to detect "black", the hue may be set to the maximum range (0-179), the saturation may be set to the maximum range (0-255), and the value range may be set to 0-30. In order to detect "white", the hue may be set to the maximum range (0-179), the saturation may be set to the maximum range (0-255), and the value range may be set to 200-255. Any pixel that has a hue, a saturation, and a value falling within such setting ranges is a pixel having the color to be detected. In the case of detecting a green pixel, for example, the hue range may be set to a range of e.g. 30-90.

Generating an image in which the color of a crop row for detection is enhanced (enhanced image) makes it easy to distinguish (i.e., extract) crop row regions from the remaining background regions (segmentation).

Next, operation S2 will be described.

In operation S2, from the enhanced image **42,** the processing device **122** generates a plan view image being classified into first pixels of which a color index value for the crop row is equal to or greater than a threshold and second pixels of which this index value is below the threshold. The plan view image is an image as viewed from above the ground surface.

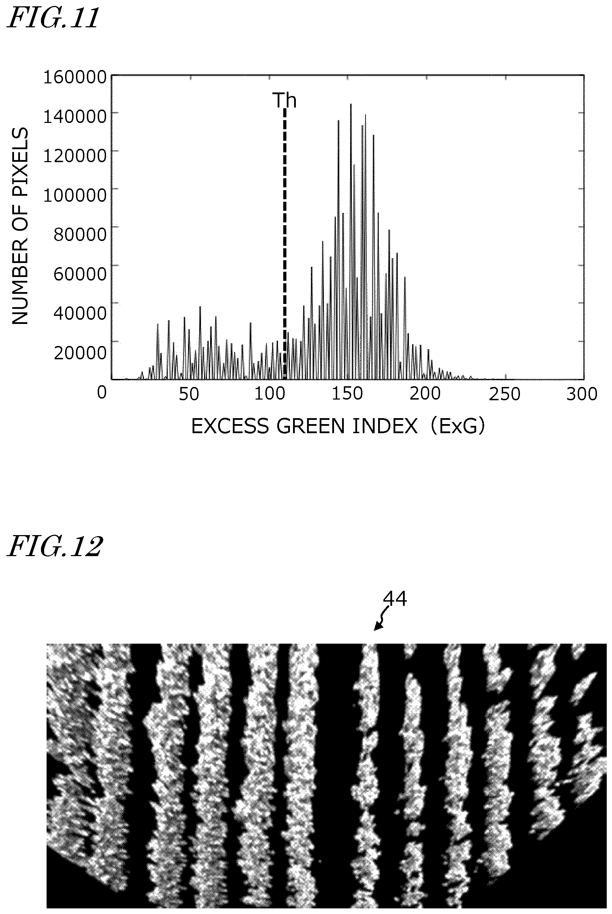

In the present embodiment, as a color index value for the crop row, the aforementioned excess green index (ExG) is adopted, and a discriminant analysis method (Otsu's binarization) is used to determine a discrimination threshold. FIG. **11** is a histogram of an excess green index (ExG) in the enhanced image **42** of FIG. **10****.** In the histogram, the horizontal axis represents the excess green index (ExG), and the vertical axis represents the number of pixels in the image (corresponding to frequency of occurrence). In FIG. **11****,** a broken line is shown indicating a threshold **Th** that is calculated by the discriminant analysis algorithm. Against this threshold **Th,** the pixels in the enhanced image **42** are classified into two class. The right side of the broken line indicating the threshold **Th** shows the frequency of occurrence of pixel whose excess green index (ExG) is equal to or greater than the threshold, these pixels being estimated as belonging to a crop class. On the other hand, the left side of the broken line indicating the threshold **Th** shows the frequency of occurrence of pixels whose excess green index (ExG) is below the threshold, these pixels being estimated as belonging to a non-crop class, e.g., the soil. In this example, the first pixels, i.e., the pixels whose index value is equal to or greater than the threshold, correspond to "crop pixels". On the other hand, the second pixels, whose index value is below the threshold, correspond to "background pixels". The background pixels correspond to objects other than those for detection, e.g., the soil surface, and the aforementioned intermediate regions (work paths) **14** may be constituted by background pixels. Note that the method of threshold determination is not limited to the above examples; for example, other methods utilizing machine learning may be used to determine the threshold.

By assigning each of the pixels constituting the enhanced image **42** as either a "first pixel" or a "second pixel", it becomes possible to extract a region for detection from the enhanced image **42.** Also, by giving "zero" to the pixel value of any "second pixel", or removing the second pixel data from the image data, it becomes possible to mask any region other than the regions for detection. When finalizing the regions to be masked, it may be possible to perform a process of including any pixel whose excess green index (ExG) exhibits a locally high value, as a noise, into the masked regions.

FIG. **12** is a diagram showing an example of a plan view image **44** being classified into first pixels and second pixels, as viewed from above the ground surface. The plan view image **44** of FIG. **12** is an image that is generated from the enhanced image **42** of FIG. **10** by an image transformation technique described below. In the plan view image **44,** the second pixels whose color index value for the crop row (which in this example is the excess green index) is below the threshold **Th** are black pixels (pixels whose value is set to zero). The regions which are constituted by second pixels are mainly regions where the surface of the soil on the ground surface is visible. In the plan view image **44** of FIG. **12****,** black triangular regions exist at right and left corners which are tangent to the bottom side. These triangular regions correspond to regions which do not appear in the enhanced image **42** of FIG. **10****.** Note that, in the image **40** of FIG. **9** and the enhanced image **42** of FIG. **10****,** a phenomenon where lines that would actually be straight lines are distorted in peripheral portions of the image is observed. Such image distortion is ascribable to the performance of the camera lenses, and may be corrected by using internal parameters of the camera. Processes such as enhancement of the crop regions, masking, and distortion correction may be referred to as preprocessing. The preprocessing may also include processes other than these processes.

The plan view image **44** of FIG. **12** is an overhead view image in which a reference plane **Re** that is parallel to the ground surface is viewed directly from above along the normal direction of the reference plane **Re.** This overhead view image can be generated from the enhanced image **42** of FIG. **10** through homography transformation (planar perspective projection). Homography transformation is a kind of geometric transformation where a point that is on a given plane in a three-dimensional space can be converted to a point that is on another arbitrary plane.

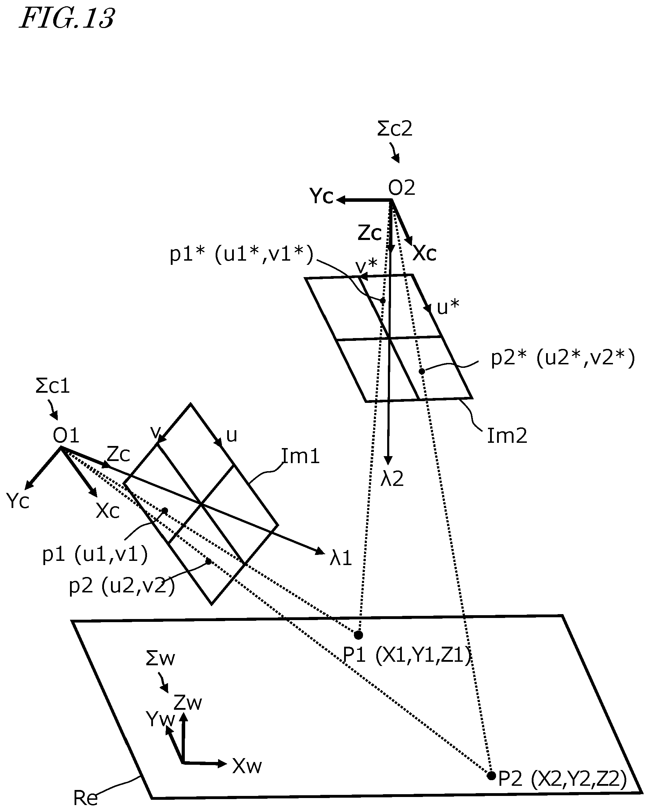

FIG. **13** is a perspective view schematically showing the relative locations between: each of a camera coordinate system **Σc1** of an imaging device that has a first pose (position and orientation) and a camera coordinate system **Σc2** of an imaging device that has a second pose; and the reference plane **Re.** In the illustrated example, the camera coordinate system **Σc1** is inclined so that its Zc axis obliquely intersects the reference plane **Re.** An imaging device having the first pose corresponds to an imaging device that is mounted to the agricultural machine. On the other hand, the camera coordinate system **Σc2** has its Zc axis lying orthogonal to the reference plane **Re.** Stated otherwise, the camera coordinate system **Σc2** is placed in a state that allows for acquiring an overhead view image in which the reference plane **Re** is viewed directly from above along the normal direction of the reference plane **Re.**

At a position that is distant from an origin **O1** of the camera coordinate system **Σc1** by the focal length of the camera along the Zc axis, an imaginary image plane **Im1** exists. The image plane **Im1** is orthogonal to the Zc axis and the camera optical axis **λ1**. A pixel position on the image plane **Im1** is defined by an image coordinate system having a u axis and a v axis that are orthogonal to each other. For example, a point **P1** and a point **P2** located on the reference plane **Re** may have coordinates (X1,Y1,Z1) and (X2,Y2,Z2) in the world coordinate system **Σw**, respectively. In the example of FIG. **13****,** the Xw axis and the Yw axis of the world coordinate system **Σw** are on the reference plane **Re.** Therefore, Z1=Z2=0. The reference plane **Re** is set so as to expand along the ground surface.

Through perspective projection based on a pinhole camera model, the point **P1** and the point **P2** on the reference plane **Re** are converted, respectively, into a point **p1** and a point **p2** on the image plane **Im1** of the imaging device having the first pose. On the image plane **Im1**, the point **p1** and the point **p2** are at pixel positions indicated by coordinates (u1,v1) and (u2,v2), respectively.

When the imaging device has the second pose, an imaginary image plane **Im2** exists at a position that is distant from an origin **O2** of the camera coordinate system **Σc2** by the focal length of the camera along the Zc axis. In this example, the image plane **Im2** is parallel to the reference plane **Re.** A pixel position on the image plane **Im2** is defined by an image coordinate system having a u* axis and a v* axis that are orthogonal to each other. Through perspective projection, a point **P1** and a point **P2** on the reference plane **Re** are converted, respectively, into a point **p1*** and a point **p2*** on the image plane **Im2.** On the image plane **Im2,** the point **p1*** and point **p2*** are at pixel positions indicated by coordinates (u1*,v1*) and (u2*,v2*), respectively.

Once the relative locations of the camera coordinate systems **Σc1** and **Σc2** with respect to the reference plane **Re** (world coordinate system **Σw**) are given, then, for a given point (u,v) on the image plane **Im1**, it is possible to determine a corresponding point (u*,v*) on the image plane **Im2** through homography transformation. When point coordinates are expressed by a homogeneous coordinate system, such homography transformation is defined by a transformation matrix H of 3 rows × 3 columns. [eq. 1] $\left(\begin{matrix}u * \\ v * \\ 1\end{matrix}\right) = H \left(\begin{matrix}u \\ v \\ 1\end{matrix}\right)$

The content of the transformation matrix H is defined by numerical values of h₁₁, h₁₂, ... , h₃₂, as indicated below. [eq. 2] $\left(\begin{matrix}u * \\ v * \\ 1\end{matrix}\right) = \left(\begin{matrix}h 11 & h 12 & h 13 \\ h 21 & h 22 & h 23 \\ h 31 & h 32 & 1\end{matrix}\right) \left(\begin{matrix}u \\ v \\ 1\end{matrix}\right)$

The eight numerical values (h₁₁, h₁₂, ..., h₃₂) can be calculated by a known algorithm once a calibration board that is placed on the reference plane **Re** is imaged by the imaging device **120** mounted to the agricultural machine 100.

When a point on the reference plane **Re** has coordinates (X,Y,0), the coordinates of the corresponding points on the respective camera image planes **Im1** and **Im2** are associated with the point (X,Y,0) by respective homography transformation matrices H1 and H2, as indicated by the formulae of eq. 3 and eq. 4 below. [eq. 3] $\left(\begin{matrix}u \\ v \\ 1\end{matrix}\right) = H 1 \left(\begin{matrix}X \\ Y \\ 1\end{matrix}\right)$ [eq. 4] $\left(\begin{matrix}u * \\ v * \\ 1\end{matrix}\right) = H 2 \left(\begin{matrix}X \\ Y \\ 1\end{matrix}\right)$

From the above two formulae, the following formula is derived. As is clear from this formula, the transformation matrix H is equal to H2H1⁻¹. H1⁻¹ is an inverse of H1. [eq. 5] $\left(\begin{matrix}u * \\ v * \\ 1\end{matrix}\right) = H 2 H {1}^{- 1} \left(\begin{matrix}u \\ v \\ 1\end{matrix}\right)$

The content of the transformation matrices H1 and H2 depends on the reference plane **Re;** therefore, if the position of the reference plane **Re** changes, the content of the transformation matrix H also changes.

By utilizing such homography transformation, a plan view image of the ground surface can be generated from an image of the ground surface acquired by the imaging device having the first pose (imaging device mounted to the agricultural machine). In other words, through homography transformation, coordinates of a given point on the image plane **Im1** of the imaging device **120** can be converted into coordinates of a point that is on the image plane **Im2** of an imaginary imaging device having a predetermined pose with respect to the reference plane **Re.**

After calculating the content of the transformation matrix H, the processing device **122** executes a software program based on the aforementioned algorithm to generate, from time-series color images or preprocessed images of time-series color images, overhead view images in which the ground surface **10** is viewed from above.

In the above description, it is assumed that points (e.g., **P1, P2)** in a three-dimensional space are all located on the reference plane **Re** (e.g., Z1=Z2=0). In the case where the height of a crop with respect to the reference plane **Re** is non-zero, in the plan view image resulting after homography transformation, the position of a corresponding point will be shifted from its proper position. In order to suppress an increase in the amount of shift, it is desirable that the height of the reference plane **Re** is close to the height of the crop for detection. Bumps and dents, e.g., ridges, furrows, or trenches, may exist on the ground surface **10.** In such cases, the reference plane **Re** may be offset upward from the bottoms of such bumps and dents. The offset distance may be appropriately set depending on the bumps and dents of the ground surface **10** on which crops are planted.

While the agricultural machine **100** is traveling on the ground surface **10,** if the vehicle body **110** (see FIG. **1****)** undergoes a roll or pitch motion, the pose of the imaging device **120** changes, whereby the content of the transformation matrix H1 may change. In such a case, angles of rotation of roll and pitch of the vehicle body **110** may be measured with an IMU, and the transformation matrix H1 and the transformation matrix H can be corrected in accordance with the changes in the pose of the imaging device.

By the above-described method, the processing device **122** according to the present embodiment generates a plan view image as viewed from above the ground surface, the plan view image being classified into first pixels of which a color index value for the crop row is equal to or greater than a threshold and second pixels of which this index value is below the threshold; thereafter, the processing device **122** performs operation S3.

Next, operation S3 will be described.

In operation S3, based on the index values of the first pixels, the processing device **122** determines the positions of the edge lines of the crop row. Specifically, the index values of the first pixels (i.e., pixels whose color index value is equal to or greater than a threshold) are totaled along a plurality of scanning lines in the plan view image.

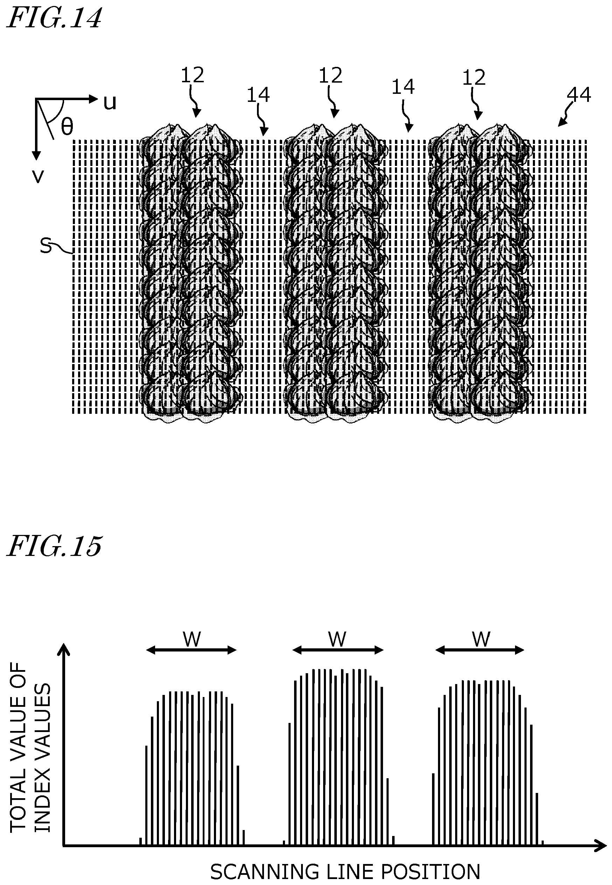

FIG. **14** is an example of a plan view image **44** in which three crop rows **12** appear. In this example, the directions of the crop rows **12** are parallel to the vertical direction in the image (v axis direction). FIG. **14** shows a multitude of scanning lines (broken line) **S** that are parallel to the vertical direction in the image (v axis direction). The processing device **122** totals the index values of pixels that are located on the plurality of scanning lines **S** to obtain a total value for each scanning line **S.**

FIG. **15** is a diagram schematically showing a relationship between positions of scanning lines **S** and total values of index values (histogram of total values), as obtained with respect to the plan view image of FIG. **14****.** In FIG. **15****,** the horizontal axis represents the positions of scanning lines **S** along the horizontal direction in the image (u axis direction). In the plan view image **44,** when many of the pixels that are crossed by a scanning line **S** are first pixels belonging to a crop row **12,** that scanning line **S** has a large total value. On the other hand, when many of the pixels that are crossed by a scanning line **S** are second pixels (background pixels) belonging to an intermediate region (work path) **14** existing between crop rows **12,** that scanning line **S** has a small total value. Note that, in the present embodiment, the intermediate regions (work paths) **14** are masked, so that the second pixels have an index value of zero.

In the histogram of FIG. **15****,** there exist: concave regions whose total value is zero or near-zero; and convex regions that are distinguished by such concave regions. The concave regions correspond to intermediate regions (work paths) **14,** whereas the convex regions correspond to crop rows **12.** In the present embodiment, the positions of scanning lines **S** having total values at predetermined positions on opposite sides of a peak of total values within a convex region, specifically, those which accounts for a predetermined rate (e.g., a value chosen in a range from 60% to 90%) with respect to the peak of total values, are determined as the positions of edge lines of a crop row **12.** Both ends of an arrow **W** in FIG. **15** indicate the positions of edge lines of each crop row **12.** In the example of FIG. **15****,** the positions of the edge lines of each crop row **12** are positions of scanning lines **S** having a 80% value of a peak of total values of the crop row **12.**

In the present embodiment, the second pixels are masked before color index values for the crop row is totaled upon each scanning line **S.** In other words, it is not that the number of first pixels (number of pixels) is counted in a plan view image that has been binarized based on a classification between first pixels and second pixels. In the case where the number of first pixels is counted, if a multitude of pixels (classified as first pixels) that slightly exceed the threshold Th due to fallen leaves and weeds or the like exist, for example, the count value of first pixels will increase. On the other hand, as in the embodiment of the present disclosure, totaling color index values for the crop row with respect to first pixels, rather than relying on the number of first pixels, suppresses misjudgments associated with fallen leaves or weeds, thus improving the robustness of crop row detection.

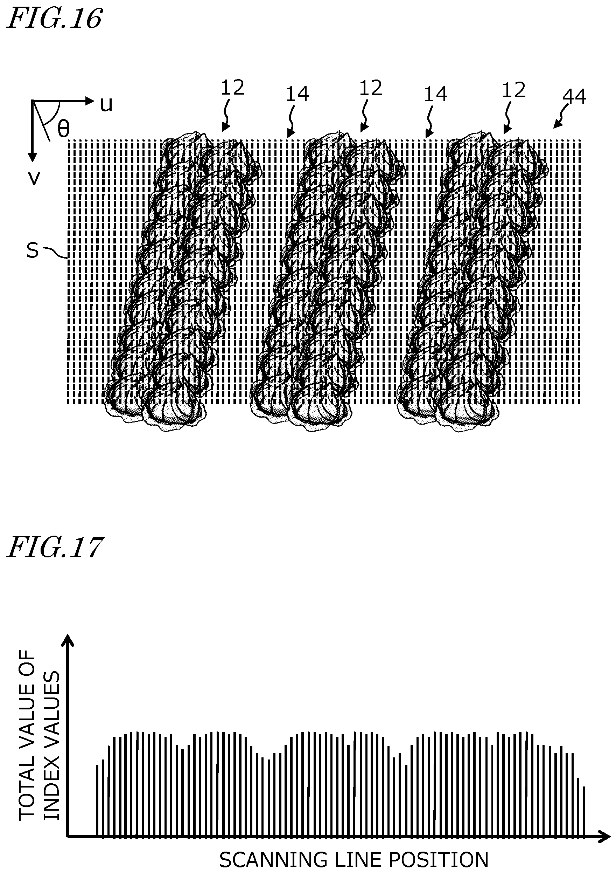

FIG. **16** shows an example of a plan view image **44** in which crop rows **12** extend obliquely. As has been described with reference to FIG. **3** and FIG. **4****,** depending on the orientation of the agricultural machine **100,** the crop rows **12** may extend in directions that are inclined right or left in the image **40** acquired by the imaging device **120.** If the plan view image **44** is generated from such an image through homography transformation, as in the example of FIG. **16****,** the direction of the crop rows **12** will be inclined from the vertical direction in the image (v axis direction).

FIG. **16** also shows a multitude of scanning lines (broken line) **S** that are parallel to the vertical direction in the image (v axis direction). When the processing device **122** totals the index values of pixels that are located on such a plurality of scanning lines **S** to obtain a total value for each scanning line **S,** a histogram of total values as shown in FIG. **17** may result. FIG. **17** is a diagram schematically showing a relationship between positions of scanning lines **S** and total values of index values, as obtained with respect to the plan view image of FIG. **16****.** From this histogram, edge lines of the crop rows **12** cannot be determined.

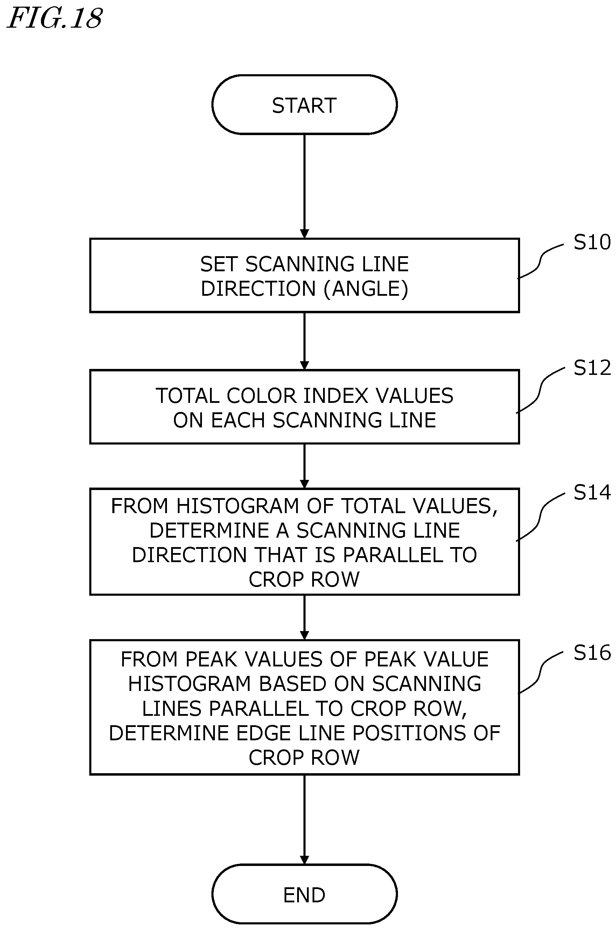

FIG. **18** is a flowchart showing an example procedure of varying the direction (angle) of scanning lines **S** in order to search for a direction (angle) of scanning lines **S** that is parallel to the direction of the crop rows **12.**

At step **S10,** a direction (angle) of the scanning lines **S** is set. Herein, clockwise angles **θ** are defined relative to the u axis of the image coordinate system (see FIG. **14** and FIG. **16****).** The search through angles **θ** may be done by setting a range of e.g., 60 to 120 degrees and using angle variations of 1 degree, for example. In this case, at step **S1,** 60, 61, 62,..., 119 and 120 degrees are given as the angle **θ** of scanning lines **S.**

At step **S12,** index values are totaled for the pixels on any scanning line **S** extending in the direction of each angle **θ,** thereby generating a histogram of total values. The histogram will exhibit a different distribution depending on the angle **θ**.

At step **S14,** from among a plurality of histograms thus obtained, a histogram is selected that has steep boundaries between bumps and dents, e.g., as shown in FIG. **15****,** such that the crop rows **12** are clearly distinguishable from the intermediate regions **14,** and the angle **θ** of scanning lines **S** that is conducive to that histogram is determined.

At step **S16,** from the peak values of the histogram corresponding to the angle **θ** determined at step **S14,** edge lines of each crop row **12** are determined. As described above, positions of scanning lines **S** having a total value that is 0.8 times the peak, for example, may be adopted as the edge lines.

Note that, when searching through directions (angles) of the scanning lines **S,** each time the angle **θ** is varied by 1 degree within the range of search, a histogram of total values on the scanning lines **S** at that angle **θ** may be generated. A feature (e.g., recess depth/protrusion height, a differential value of the envelope, etc.) may be calculated from the waveform of the histogram, and based on that feature, it may be determined whether the direction of the crop rows **12** is parallel to the direction of the scanning lines **S** or not.

Note that the method of determining the angle **θ** is not limited to the above examples. In the case where the direction in which the crop rows extend is known through measurements, the direction of the agricultural machine may be measured with an inertial measurement unit (IMU) mounted on the agricultural machine **100,** and its angle **θ** with respect to the direction in which the crop rows extend may be determined.

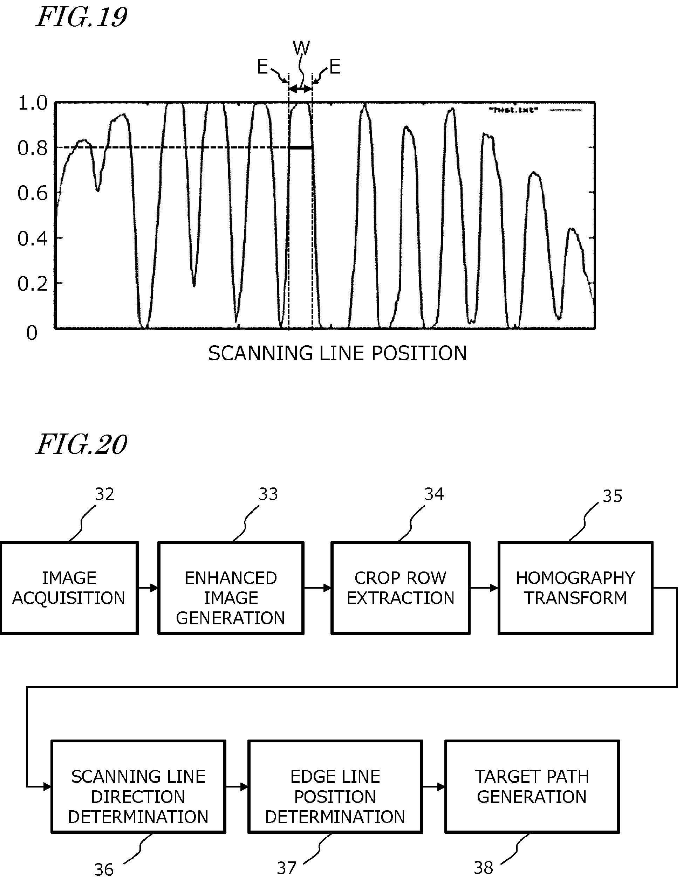

FIG. **19** is a diagram showing an example of a total value histogram that is generated by the plan view image of FIG. **12****.** For a protrusion of the histogram that is located in the center, scanning line positions that are 0.8 times its peak value are determined as the positions of edge lines **E.** In this histogram, the protrusion peaks become lower and the protrusion peaks become more spread out as the scanning line positions become more distant toward the right and the left from the center. This is because: as is clear from the image of FIG. **12****,** the image has little distortion at the center of the plan view image, whereas distortion of the image increases away from the center toward the right and the left; and the black triangular regions located at opposite sides of the bottom side cause a decrease in the total values.

When detection of crop rows is utilized for the traveling of the agricultural machine, the crop rows to be accurately detected are at the center of the image or its vicinity. Therefore, distortion in regions near both ends of the right-left direction of the plan view image can be ignored.

FIG. **20** is a block diagram showing a series of processes that are executed by the processing device **122** according to the present embodiment. As shown in FIG. **20****,** by executing an image acquisition **32,** an enhanced image generation **33,** a crop row extraction **34,** and a homography transformation **35,** the processing device **122** is able to obtain the plan view image **44** shown in FIG. **16****,** for example. By further executing a scanning line direction determination **36** and an edge line position determination **37,** the processing device **122** is able to obtain the positions of edge lines of the crop rows. Thereafter, the processing device **122,** or a path generator that has acquired information indicating the positions of the edge lines from the processing device **122,** is able to execute a target path generation **38** for the agricultural machine, on the basis of the edge lines. A target path may be generated such that wheels that are included in the agricultural machine are maintained within an intermediate region (work path) **14** that is interposed between the edge lines **E.** For example, a target path may be generated such that the central portion along the width direction of any tire passes through the center between two edge lines that are located at both ends of an intermediate region (work path) **14.** With such a target path, even if the agricultural machine goes off the target path during travel by about several centimeters, the tires are less likely to go into a crop row.

It has been confirmed that, according to embodiments of the present disclosure, crop row detection with high accuracy is possible by suppressing the influences of forward light, backlight, sunny weather, cloudy weather, fog, and other weather conditions, or daylighting conditions that vary depending on the time zone of work. It has also been confirmed that crop row detection with high robustness is possible even when there is a change in the kind of crop (cabbage, broccoli, radish, carrot, lettuce, Chinese cabbage, etc.), growth state (from seedling to fully grown), presence/absence of diseases, presence/absence of fallen leaves or weeds, and soil color.

In the above embodiment, thereafter homography transformation is executed after performing a step of determining a binarization threshold and extracting crop regions based on pixels at a threshold or above. However, the step of extracting crop regions may be performed after homography transformation. Specifically, in the series of processes shown in FIG. **20****,** the homography transformation **35** may be executed between the enhanced image generation **33** and the crop row extraction **34,** or executed between the image acquisition **32** and the enhanced image generation **33.**

Hereinafter, an embodiment of another method of crop row detection to be performed by a crop detection system according to the present disclosure will be described.

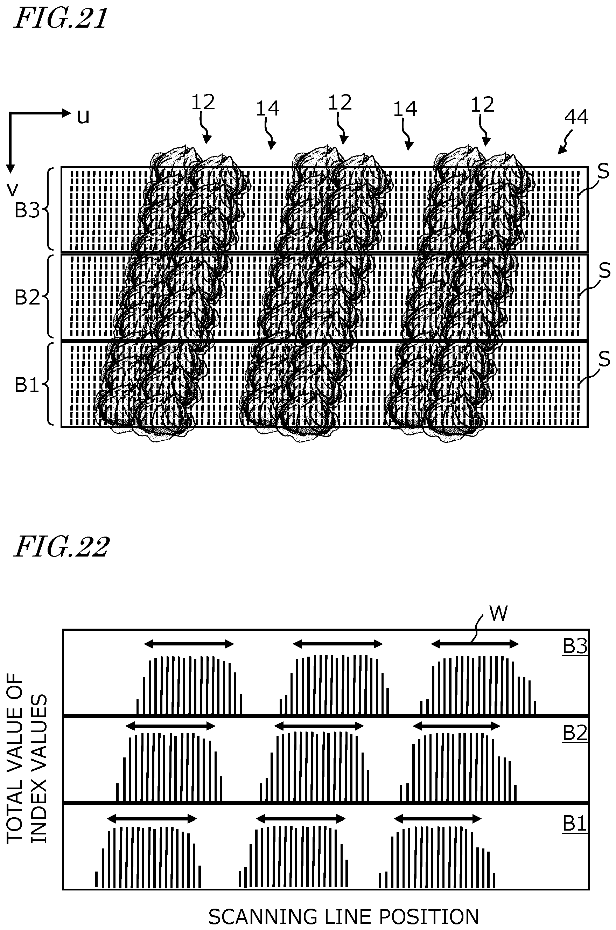

FIG. **21** is a diagram for describing a method which splits a whole or a part of the plan view image into a plurality of blocks, and determines the positions of edge lines for each of the plurality of blocks.

In the present embodiment, the processing device **122** splits a whole or a part of the plan view image **44** into a plurality of blocks. Then, for each of the plurality of blocks, the positions of edge lines **E** of crop rows **12** are determined. In the illustrated example, in the plan view image, there are three blocks **B1, B2** and **B3** in belt shapes that are continuous along the horizontal direction in the image. The processing device **122** is able to determine edge lines of crop rows based on a belt shape in a direction that is different from the traveling direction of the agricultural machine **100.**

FIG. **22** is a diagram schematically showing a relationship (total value histogram) between positions of scanning lines **S** and total values of index values for each of blocks **B1, B2** and **B3** of the plan view image of FIG. **21****.** The scanning line **S** for which to perform totalization is always parallel to the vertical direction in the image. Totalization of index values is performed block by block, and there is no need to change the direction (angle) of the scanning lines **S.** By reducing the length of the scanning lines **S,** even if the crop rows **12** extend obliquely, it is possible to appropriately detect regions of the second pixels (background pixels) that are ascribable to the intermediate regions (work paths) **14.** This eliminates the need to change the angles of the scanning lines **S.**

In FIG. **22****,** both ends of an arrow **W** indicate the positions of edge lines of a crop row, as determined for each of blocks **B1, B2** and **B3.** In the example shown in FIG. **21****,** the directions of the crop rows **12** are inclined with respect to the direction of the scanning lines **S.** Therefore, in the earlier-described case where scanning line positions exhibiting a value that is 0.8 times a peak value of the total value histogram are adopted as the positions of edge lines **E** of a crop row **12,** the positions of such edge lines **E** correspond to both ends of a "width" passing near the center of the crop row **12,** in each of blocks **B1, B2** and **B3.**

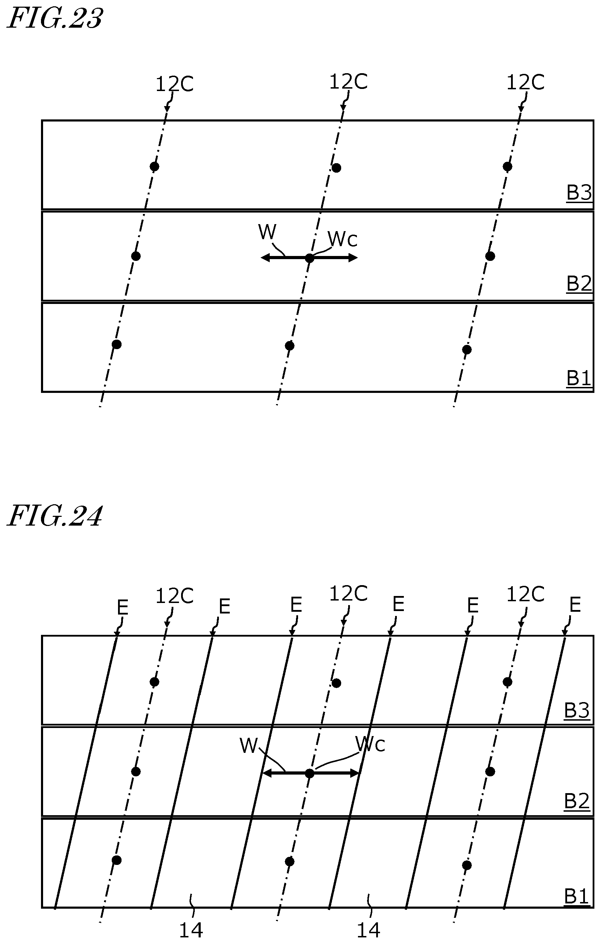

FIG. **23** shows crop row centers **Wc** in each of blocks **B1, B2** and **B3** in FIG. **22****.** A crop row center **Wc** is determined from the center of an arrow **W** that defines the edge lines of a crop row as determined from the total value histogram of FIG. **22****,** and is located at the center of each block along the vertical direction in the image. FIG. **23** shows examples of approximation line **12C** for crop row centers **Wc** belonging to each identical crop row **12.** An approximation line **12C** is a straight line that is determined so that a mean square of its distances (errors) from the plurality of crop row centers **Wc** of each crop row **12** is minimum, for example. Such an approximation line **12C** corresponds to a line passing through the center of the crop row **12.**

FIG. **24** is a top view showing examples of edge lines **E** of crop rows **12** as determined from the approximation lines **12C** in FIG. **23****.** In this example, two edge lines **E** that are associated with each crop row **12** have an interval that is equal to the length of an arrow **W,** and are at equidistant positions from an approximation line **12C.**

According to the present embodiment, there is no need to change the directions (angles) of the scanning lines, and the edge lines **E** of the crop rows **12** can be determined with less computational load. Note that the length of each block along the vertical direction in the image may be set to an equivalent of a distance of 1 to 2 meters on the ground surface, for example. Although the present embodiment splits one image into three blocks to derive total value histograms, the number of blocks may be four or more. The block shape are not limited to the above examples. In the plan view image, the block may be in belt shapes that are continuous along either the horizontal direction in the image or the vertical direction in the image. The processing device **122** is able to determine the edge lines of the crop rows through splitting into blocks of belt shapes extending in a direction that is different from the traveling direction of the agricultural machine **100.**

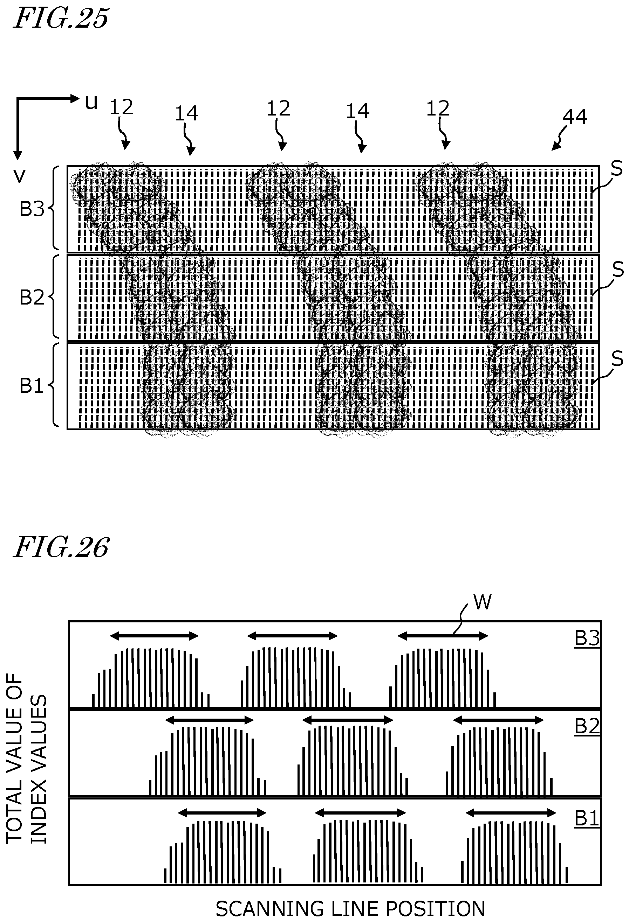

FIG. **25** schematically illustrates the crop rows **12** in the plan view image **44** including portions that are bent in curve shapes. FIG. **26** schematically shows a total value histogram for each of blocks **B1, B2** and **B3** of the plan view image **44** of FIG. **25****.**

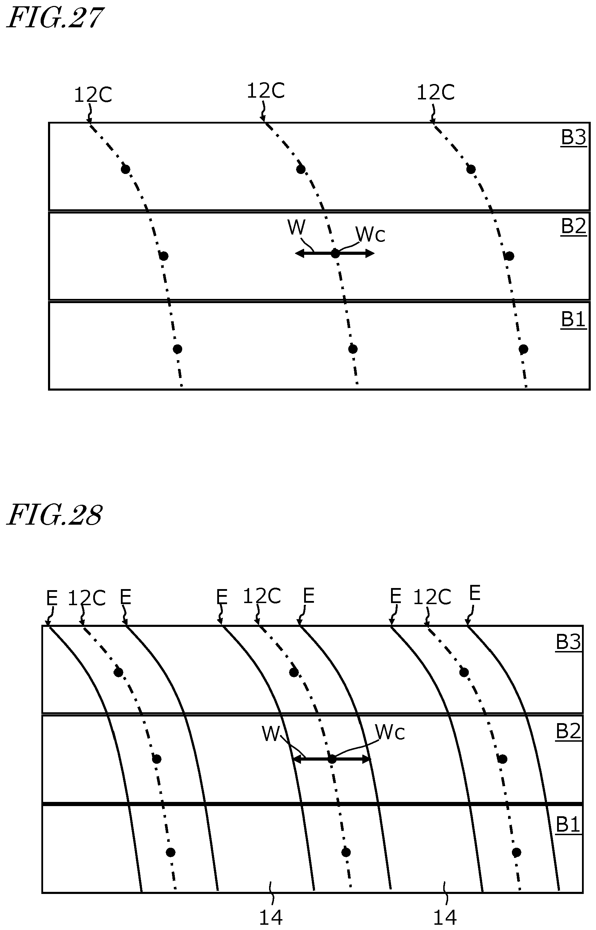

FIG. **27** is a diagram showing crop row centers **Wc** in each of blocks **B1, B2** and **B3** in FIG. **26****,** and examples of approximation lines **12C** for the respective crop row centers **Xc.** An approximation line **12C** in this example is a curve (e.g., a higher-order curve such as a cubic curve) that is derived so that a mean square of its distances (errors) from the crop row centers **Wc** of each crop row **12** is minimum, for example. Such approximation lines **12C** correspond to curved lines which pass through the centers of the crop rows **12** having a curved portion.

FIG. **28** is a top view showing examples of edge lines **E** of crop rows **12** as determined from the approximation lines in FIG. **27****.** The edge lines **E** are generated by a similar method to the method that has been described with reference to FIG. **24****.** In other words, two edge lines **E** that are associated with each crop row **12** have an interval that is equal to the length of an arrow **W,** and are at equidistant positions from an approximation line **12C.**

As described above, by splitting the plan view image into a plurality of blocks and generating a total value histogram for each block, it becomes easy to determine the direction of a crop row, and even if the crop row changes its direction in the middle, it is possible to know the direction after the change.

The above-described methods of crop row detection can all be implemented by a computer, and carried out by causing the computer to execute desired operations.

### (Embodiment 2)

Next, an agricultural machine having a crop row detection system according to embodiment of the present disclosure will be described.

An agricultural machine according to the present embodiment includes the above-described crop row detection system. Moreover, this agricultural machine includes a control system for performing control to achieve auto-steer driving. The control system is a computer system that includes a storage device and a controller, and is configured to control steering, travel, and other operations of the agricultural machine.

In a usual automatic steering operation mode, the controller identifies the position of the agricultural machine by using the positioning device, and based on a target path which has been generated in advance, controls the steering of the agricultural machine so that the agricultural machine travels along the target path. Specifically, it controls the steering angle of the wheels responsible for steering (e.g., the front wheels) of the agricultural machine so that the work vehicle travels along the target path within the field. The agricultural machine according to the present embodiment includes an automatic steering device which performs not only such a usual automatic steering mode, but also self-driving under "row-following control" within any field in which rows of crops are made.

The positioning device includes a GNSS receiver, for example. Such a positioning device is able to identify the position of the work vehicle based on signals from GNSS satellites. However, when there are crop rows in the field, even if the positioning device is able to measure the position of the agricultural machine with a high accuracy, the interspaces between crop rows are narrow, such that the traveling equipment, e.g., wheels, of the agricultural machine may be liable to protrude into the crop rows depending on how the crops are planted or depending on the state of growth. In the present embodiment, however, the aforementioned crop row detection system can be used to detect actually-existing crop rows and perform appropriate automatic steering. In other words, the automatic steering device included in the agricultural machine embodiment of the present disclosure is configured to control the steering angle of the wheels responsible for steering based on the positions of the edge lines of a crop row that are determined by the crop row detection system.

Moreover, in the agricultural machine according to the present embodiment, the processing device of the crop row detection system can monitor the positional relationship between the edge lines of crop rows and the wheels responsible for steering on the basis of time-series color images. By generating a positional error signal from this positional relationship, it becomes possible for the automatic steering device of the agricultural machine to appropriately adjust the steering angle so as to reduce the positional error signal.

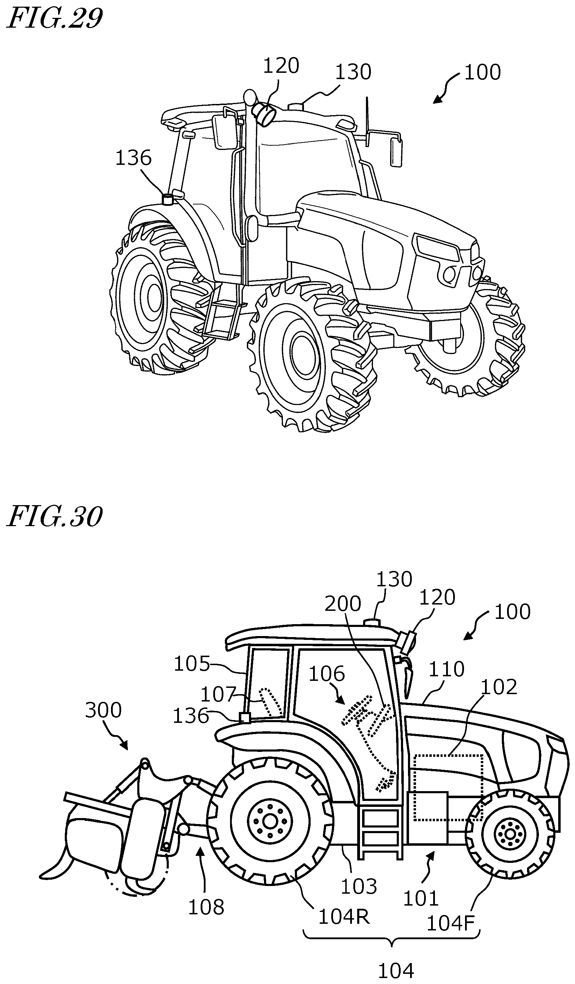

FIG. **29** is a perspective view showing an example appearance of the agricultural machine **100** according to the present embodiment. FIG. **30** is a side view schematically showing an example of the agricultural machine **100** to which an implement **300** is attached. The agricultural machine **100** according to the present embodiment is an agricultural tractor (work vehicle) having the implement **300** attached thereto. The agricultural machine **100** is not limited to a tractor, and does not need to have the implement **300** attached thereto. The crop row detection technique according to the present disclosure can exhibit excellent effects when used in small-sized crop management machines and vegetable transplanters that may be used for operations associated with the interridge land, such as ridge making, intertillage, ridging, weeding, side dressing, and preventive pest control, for example.

The agricultural machine **100** according to the present preferred embodiment includes an imaging device **120** and an obstacle sensor(s) **136.** Although one obstacle sensor **136** is illustrated in FIG. **29****,** obstacle sensors 136 may be provided at a plurality of positions of the agricultural machine **100.**

As shown in FIG. **30****,** the agricultural machine **100** includes a vehicle body **110,** a prime mover (engine) **102,** and a transmission **103.** On the vehicle body **110,** tires (wheels) **104** and a cabin **105** are provided. The tires **104** include a pair of front wheels **104F** and a pair of rear wheels **104R.** Inside the cabin **105,** a driver's seat **107,** a steering device **106,** an operational terminal **200,** and switches for manipulation are provided. Either the front wheels **104F** or the rear wheels **104R** may be crawlers, rather than tires. The agricultural machine **100** is a four-wheel drive vehicle including four wheels **104** as driving wheels, or a two-wheel drive vehicle including a pair of front wheels **104F** or a pair of rear wheels **104R** as driving wheels.

The positioning device **130** in the present embodiment includes a GNSS receiver. The GNSS receiver includes an antenna to receive a signal(s) from a GNSS satellite(s) and a processing circuit to determine the position of the agricultural machine **100** based on the signal (s) received by the antenna. The positioning device **130** receive a GNSS signal(s) transmitted from a GNSS satellite(s), and performs positioning on the basis of the GNSS signal (s). GNSS is a general term for satellite positioning systems, such as GPS (Global Positioning System), QZSS (Quasi-Zenith Satellite System, e.g., MICHIBIKI), GLONASS, Galileo, BeiDou, and the like. Although the positioning device **130** in the present embodiment is disposed above the cabin **105,** it may be disposed at any other position.

Furthermore, the positioning device **130** may complement the position data by using a signal from an inertial measurement unit (IMU). The IMU can measure tilts and minute motions of the agricultural machine **100.** By complementing the position data based on the GNSS signal using the data acquired by the IMU, the positioning performance can be improved.

In the examples shown in FIGS. **29** and **30****,** the obstacle sensor(s) **136** is provided at the rear of the vehicle body **110.** The obstacle sensor(s) **136** may be disposed at any other position than the rear of the vehicle body **110.** For example, one or more obstacle sensors **136** may be disposed at any position selected from among the sides of the vehicle body **110,** the front of the vehicle body **110,** and the cabin **105.** The obstacle sensor(s) **136** detects objects around the agricultural machine **100.** Each obstacle sensor **136** may include a laser scanner or an ultrasonic sonar, for example. When an object exists at a position closer to the obstacle sensor **136** than a predetermined distance, the obstacle sensor **136** outputs a signal indicating the presence of an obstacle. A plurality of obstacle sensors **136** may be provided at different positions of the body of the agricultural machine **100.** For example, a plurality of laser scanners and a plurality of ultrasonic sonars may be disposed at different positions of the body. Providing a multitude of obstacle sensors **136** can reduce blind spots in monitoring obstacles around the agricultural machine **100.**

The prime mover **102** may be a diesel engine, for example. Instead of a diesel engine, an electric motor may be used. The transmission **103** can change the propulsion and moving speed of the agricultural machine **100** through a speed changing mechanism. The transmission **103** can also switch between forward travel and backward travel of the agricultural machine **100.**

The steering device **106** includes a steering wheel, a steering shaft connected to the steering wheel, and a power steering device to assist in the steering by the steering wheel. The front wheels **104F** are the wheels responsible for steering, such that changing their angle of turn (also referred to as "steering angle") can cause a change in the traveling direction of the agricultural machine **100.** The steering angle of the front wheels **104F** can be changed by manipulating the steering wheel. The power steering device includes a hydraulic device or an electric motor to supply an assisting force for changing the steering angle of the front wheels **104F.** When automatic steering is performed, under the control of a controller disposed in the agricultural machine **100,** the steering angle may be automatically adjusted by the power of the hydraulic device or electric motor.

A linkage device **108** is provided at the rear of the vehicle body **110.** The linkage device **108** may include, e.g., a three-point linkage (also referred to as a "three-point link" or a "three-point hitch"), a PTO (Power Take Off) shaft, a universal joint, and a communication cable. The linkage device **108** allows the implement **300** to be attached to or detached from the agricultural machine **100.** The linkage device **108** is able to raise or lower the three-point linkage device with a hydraulic device, for example, thus controlling the position or pose of the implement **300.** Moreover, motive power can be sent from the agricultural machine **100** to the implement **300** via the universal joint. While towing the implement **300,** the agricultural machine **100** allows the implement **300** to perform a predetermined task. The linkage device may be provided frontward of the vehicle body **110.** In that case, the implement may be connected frontward of the agricultural machine **100.**

The implement **300** shown in FIG. **30** is a rotary cultivator, for example. The implement **300** to be towed by or attached to a tractor or other work vehicles when traveling along crop rows may be any kind, so long as it is used in operations associated with the interridge land, such as ridge making, intertillage, ridging, weeding, side dressing, and preventive pest control.

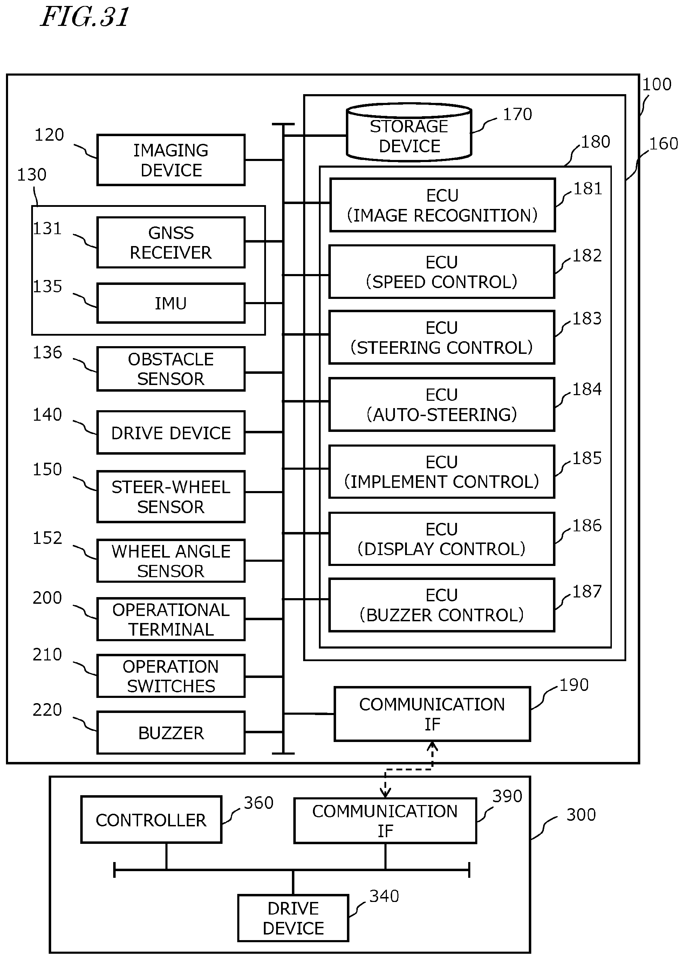

FIG. **31** is a block diagram showing an example of a schematic configuration of the agricultural machine **100** and the implement **300.** The agricultural machine **100** and the implement **300** can communicate with each other via a communication cable that is included in the linkage device **108.**

In addition to the imaging device **120,** the positioning device **130,** the obstacle sensor **136,** and the operational terminal **200,** the agricultural machine **100** in the example of FIG. **31** includes a drive device **140,** a steering wheel sensor **150,** an angle-of-turn sensor (wheel angle sensor) **152,** a control system **160,** a communication interface (IF) **190,** operation switches **210,** and a buzzer **220.** The positioning device **130** includes a GNSS receiver **131,** an RTK receiver **122,** and an inertial measurement unit (IMU) **125.** The control system **160** includes a storage device **170** and a controller **180.** The controller **180** includes a plurality of electronic control units (ECU) **181** to **186.** The implement **300** includes a drive device **340,** a controller **380,** and a communication interface (IF) **390.** Note that FIG. **31** shows component elements which are relatively closely related to the operation of automatic steering or self-driving by the agricultural machine **100,** while other component elements are omitted from illustration.

The positioning device **130** performs positioning of the agricultural machine **100** by utilizing GNSS. In the case where the positioning device **130** includes a RTK receiver, not only GNSS signals transmitted from multiple GNSS satellites, but also a correction signal that is transmitted from a reference station is used. The reference station may be disposed around the field that is traveled by the agricultural machine **100** (e.g., at a position within 10 km of the agricultural machine **100).** The reference station generates a correction signal based on the GNSS signals received from the multiple GNSS satellites, and transmits the correction signal to the positioning device **130.** The GNSS receiver **131** in the positioning device **130** receives the GNSS signals transmitted from the multiple GNSS satellites. Based on the GNSS signals and the correction signal, the positioning device **130** calculates the position of the agricultural machine **100,** thus achieving positioning. Use of an RTK-GNSS enables positioning with an accuracy on the order of several cm of errors, for example. Positional information (including latitude, longitude, and altitude information) is acquired through the highly accurate positioning by an RTK-GNSS. Note that the positioning method is not limited to an RTK-GNSS; any arbitrary positioning method (e.g., an interferometric positioning method or a relative positioning method) that provides positional information with the necessary accuracy can be used. For example, positioning may be performed by utilizing a VRS (Virtual Reference Station) or a DGPS (Differential Global Positioning System).

The IMU **135** includes a 3-axis accelerometer and a 3-axis gyroscope. The IMU **135** may include a direction sensor such as a 3-axis geomagnetic sensor. The IMU **135** functions as a motion sensor which can output signals representing parameters such as acceleration, velocity, displacement, and pose of the agricultural machine **100.** Based not only on the GNSS signals and the correction signal but also on a signal that is output from the IMU **135,** the positioning device **130** can estimate the position and orientation of the agricultural machine **100** with a higher accuracy. The signal that is output from the IMU **135** may be used for the correction or complementation of the position that is calculated based on the GNSS signals and the correction signal. The IMU **135** outputs a signal more frequently than the GNSS signals. Utilizing this highly frequent signal allows the position and orientation of the agricultural machine **100** to be measured more frequently (e.g., about 10 Hz or above). Instead of the IMU **135,** a 3-axis accelerometer and a 3-axis gyroscope may be separately provided. The IMU **135** may be provided as a separate device from the positioning device **130.**

In addition to or instead of the GNSS receiver **131** and the IMU **135,** the positioning device **130** may include other kinds of sensors. Depending on the environment that is traveled by the agricultural machine **100,** it is possible to estimate the position and orientation of the agricultural machine 100 with a high accuracy based on data from such sensors.

By using the positioning device **130** as such, it is possible to generate a map of crop rows as detected by the aforementioned crop row detection system **1000.**

For example, the drive device **140** may include various devices that are needed for the traveling of the agricultural machine **100** and the driving of the implement **300,** e.g., the aforementioned prime mover **102,** transmission **103,** differential including a locking differential mechanism, steering device **106,** and linkage device **108.** The prime mover **102** includes an internal combustion engine such as a diesel engine. Instead of an internal combustion engine or in addition to an internal combustion engine, the drive device **140** may include an electric motor that is dedicated to traction purposes.

The steering wheel sensor **150** measures the angle of rotation of the steering wheel of the agricultural machine **100.** The angle-of-turn sensor **152** measures the angle of turn of the front wheels **104F,** which are the wheels responsible for steering. Measurement values by the steering wheel sensor **150** and the angle-of-turn sensor **152** are used for the steering control by the controller **180.**

The storage device **170** includes one or more storage media such as a flash memory or a magnetic disc. The storage device **170** stores various data that is generated by the sensors and the controller **180.** The data that is stored by the storage device **170** may include map data in the environment that is traveled by the agricultural machine **100,** and data of a target path of automatic steering. The storage device **170** also stores a computer program(s) to cause the ECUs in the controller **180** to perform various operations to be described later. Such a computer program(s) may be provided for the agricultural machine **100** via a storage medium (e.g., a semiconductor memory or an optical disc) or through telecommunication lines (e.g., the Internet). Such a computer program(s) may be marketed as commercial software.

The controller **180** includes a plurality of ECUs. The plurality of ECUs include an ECU **181** for image recognition, an ECU **182** for speed control, an ECU **183** for steering control, an ECU **184** for automatic steering control, an ECU **185** for implement control, an ECU **186** for display control, and an ECU **187** for buzzer control. The ECU **181** for image recognition functions as a processing device of the crop row detection system. The ECU **182** controls the prime mover **102,** the transmission **103,** and the brakes included in the drive device **140,** thus controlling the speed of the agricultural machine **100.** The ECU **183** controls the hydraulic device or electric motor included in the steering device **106** based on a measurement value of the steering wheel sensor **150,** thus controlling the steering of the agricultural machine **100.** The ECU **184** performs computations and controls for achieving auto-steer driving, based on signals which are output from the positioning device **130,** the steering wheel sensor **150,** and the angle-of-turn sensor **152.** During auto-steer driving, the ECU **184** sends the ECU **183** a command to change the steering angle. In response to this command, the ECU **183** controls the steering device **106** to change the steering angle. In order to cause the implement **300** to perform a desired operation, the ECU **185** controls the operation of the linkage device **108.** Also, the ECU **185** generates a signal to control the operation of the implement **300,** and transmits this signal from the communication IF **190** to the implement **300.** The ECU **186** controls displaying on the operational terminal **200.** For example, the ECU **186** may cause a display device of the operational terminal **200** to present various indications, e.g., a map of the field, detected crop rows, the position of the agricultural machine **100** and a target path in the map, pop-up notifications, and setting screens. The ECU **187** controls outputting of alarm sounds by the buzzer **220.**

Through the action of these ECUs, the controller **180** realizes driving via manual steering or automatic steering. During usual auto-steer driving, the controller **180** controls the drive device **140** based on the position of the agricultural machine **100** as measured or estimated by the positioning device **130** and the target path stored in the storage device **170.** As a result, the controller **180** causes the agricultural machine **100** to travel along the target path. On the other hand, in a row-following control mode where travel is done along the crop rows, the ECU **181** for image recognition determines from a detected crop row the edge lines of the crop row, and generates a target path based on these edge lines. The controller **180** performs an operation in accordance with this target path.

The plurality of ECUs included in the controller **180** may communicate with one another according to a vehicle bus standard such as CAN (Controller Area Network). Although the ECUs **181** to **187** are illustrated as individual corresponding blocks in FIG. **31****,** each of these functions may be implemented by a plurality of ECUs. Alternatively, an onboard computer that integrates the functions of at least some of the ECUs **181** to **187** may be provided. The controller **180** may include ECUs other than the ECUs **181** to **187,** and any number of ECUs may be provided in accordance with functionality. Each ECU includes a control circuit including one or more processors.

The communication IF **190** is a circuit that performs communications with the communication IF **390** of the implement **300.** The communication IF **190** performs exchanges of signals complying with an ISOBUS standard such as ISOBUS-TIM, for example, between itself and the communication IF **390** of the implement **300.** This causes the implement **300** to perform a desired operation, or allows information to be acquired from the implement **300.** Moreover, the communication IF **190** can communicate with an external computer via a wired or wireless network. The external computer may be a server computer in a farming support system which centralizes management of information concerning fields by using a cloud, and assists in agriculture by utilizing the data on the cloud, for example.

The operational terminal **200** is a terminal for the user to perform a manipulation related to the traveling of the agricultural machine **100** and the operation of the implement **300,** and may also be referred to as a virtual terminal (VT). The operational terminal **200** may include a display device such as a touch screen panel, and/or one or more buttons. By manipulating the operational terminal **200,** the user can perform various manipulations, such as switching ON/OFF the automatic steering mode, switching ON/OFF the cruise control, setting an initial position of the agricultural machine **100,** setting a target path, recording or editing a map, switching between 2WD/4WD, switching ON/OFF the locking differential, and switching ON/OFF the implement **300.** At least some of these manipulations can also be realized by manipulating the operation switches **210.** Displaying on the operational terminal **200** is controlled by the ECU **186.**

The buzzer **220** is an audio output device to present an alarm sound for alerting the user of an abnormality. For example, during auto-steer driving, the buzzer **220** may present an alarm sound when the agricultural machine **100** has mistracked from the target path by a predetermined distance or more. Instead of the buzzer **220,** a loudspeaker of the operational terminal **200** may provide a similar function. The buzzer **220** is controlled by the ECU **186.**

The drive device **340** in the implement **300** performs a necessary operation for the implement **300** to perform a predetermined task. The drive device **340** includes devices adapted to the intended use of the implement **300,** e.g., a pump, a hydraulic device, an electric motor, or a pump. The controller **380** controls the operation of the drive device **340.** In response to a signal that is transmitted from the agricultural machine **100** via the communication IF **390,** the controller **380** causes the drive device **340** to perform various operations. Moreover, a signal that is in accordance with the state of the implement **300** may be transmitted from the communication IF **390** to the agricultural machine **100.**

In the above preferred embodiments, the agricultural machine **100** may be an unmanned work vehicle which performs self-driving. In that case, component elements which are only required for human driving, e.g., the cabin, the driver's seat, the steering wheel, and the operational terminal, do not need to be provided in the agricultural machine **100.** The unmanned work vehicle may perform a similar operation to the operation according to any of the above embodiments via autonomous driving, or by remote manipulations by a user.

A system that provides the various functions according to embodiments can be mounted to an agricultural machine lacking such functions as an add-on. Such a system may be manufactured and sold independently from the agricultural machine. A computer program for use in such a system may also be manufactured and sold independently from the agricultural machine. The computer program may be provided in a form stored in a computer-readable, non-transitory storage medium, for example. The computer program may also be provided through downloading via telecommunication lines (e.g., the Internet).

### INDUSTRIAL APPLICABILITY

The technique according to the present disclosure can be applied to agricultural machines, such as vehicles for crop management, vegetable transplanters, or tractors, for example.

### REFERENCE SIGNS LIST

**10 •** • • ground surface, **12 •** • • crop row, **14 •** • • intermediate region (work path), **40 •** • • image, **42 •** • • enhanced image, **44 •** • • plan view image, **100 •** • • agricultural machine, **110** • • • vehicle body, **120 •** • • imaging device, **122 •** • • processing device, **124 •** • • automatic steering device

## Claims

1. A crop row detection system comprising:
an imaging device (120) mounted to an agricultural machine (100), the imaging device (120) being configured to image a ground surface (10) that is traveled by the agricultural machine (100) to acquire time-series color images containing at least a portion of the ground surface (10); and
a processing device (122) configured to perform image processing for the time-series color images, wherein,
the processing device (122) is configured to:
generate from the time-series color images an enhanced image (42) in which a color of a crop row (12) for detection is enhanced; **characterised in that** the processing device (122) is configured to:
generate from the enhanced image (42) a plan view image (44) as viewed from above the ground surface (10), the plan view image (44) being classified into first pixels of which a color index value for the crop row (12) is equal to or greater than a threshold and second pixels of which the index value is below the threshold;
total the index value of the first pixels along a plurality of scanning lines extending in each direction of a plurality of angles in the plan view image (44) to determine total values;
generate a histogram in which positions of the scanning lines and the total values are associated for each direction of the plurality of angles;
refer to the histogram for each direction of the plurality of angles;
determine an angle of a scanning line extending in a direction of the crop row (12) from the plurality of angles; and
determine positions of edge lines of the crop row (12) from predetermined positions on opposite sides of a peak of total values in the histogram associated with the determined angle.

2. The crop row detection system of claim 1, wherein the processing device (122) is configured to:
split a whole or a part of the plan view image (44) into a plurality of blocks, and determine the positions of the edge lines for each of the plurality of blocks.

3. The crop row detection system of claim 2, wherein,
in the plan view image (44), the plurality of blocks are in belt shapes that are continuous along a horizontal direction in the image or a vertical direction in the image; and
the processing device (122) is configured to determine the edge lines of the crop row (12) based on a belt shape in a direction that is different from a traveling direction of the agricultural machine (100).

4. The crop row detection system of claim 2 or 3, wherein, based on the positions of the edge lines in each of the plurality of blocks, the processing device (122) is configured to determine a direction in which the crop row (12) extends.

5. The crop row detection system of any one of claims 1 to 4, wherein,
the plan view image (44) is an overhead view image in which a reference plane extending along the ground surface (10) is viewed directly from above along a normal direction of the reference plane; and
the processing device (122) is configured to generate the overhead view image through homography transformation from the time-series color images or preprocessed images of the time-series color images.

6. The crop row detection system of claim 5, wherein the reference plane is offset upward, by a predetermined distance that is set in accordance with bumps and dents on the ground surface (10) having the crops being planted thereon, from the bottoms of the bumps and dents of the ground surface (10).

7. The crop row detection system of any one of claims 1 to 6, wherein the processing device (122) is configured to generate and output a target path based on the positions of the edge lines of the crop row (12).

8. An agricultural machine (100) having the crop row detection system of any one of claims 1 to 7, comprising:
traveling equipment including a wheel responsible for steering; and
an automatic steering device (124) configured to control a steering angle of the wheel responsible for steering based on the positions of the edge lines of the crop row (12) as determined by the crop row detection system.

9. The agricultural machine (100) of claim 8, wherein, based on the time-series color images, the processing device (122) of the crop row detection system is configured to monitor a positional relationship between the edge lines of the crop row (12) and the wheel responsible for steering, and supply a positional error signal to the automatic steering device (124).

10. A computer-implemented method of crop row detection, the method of crop row detection causing a computer to execute:
from an imaging device (120) mounted to an agricultural machine (100), acquiring time-series color images by imaging a ground surface (10) that is traveled by the agricultural machine (100), the time-series color images containing at least a portion of the ground surface (10);
generating from the time-series color images an enhanced image (42) in which a color of a crop row (12) for detection is enhanced;
generating from the enhanced image (42) a plan view image (44) as viewed from above the ground surface (10), the plan view image (44) being classified into first pixels of which a color index value for the crop row (12) is equal to or greater than a threshold and second pixels of which the index value is below the threshold;
totaling the index value of the first pixels along a plurality of scanning lines extending in each direction of a plurality of angles in the plan view image (44) to determine total values;
generating a histogram in which positions of the scanning lines and the total values are associated for each direction of the plurality of angles;
refering to the histogram for each direction of the plurality of angles;
determining an angle of a scanning line extending in a direction of the crop row (12) from the plurality of angles; and determing positions of edge lines of the crop row (12) from predetermined positions on opposite sides of a peak of total values in the histogram associated with the determined angle.

## Patentansprüche

1. Ein Erntegutreihenerkennungssystem, umfassend:
eine Bildgebungseinrichtung (120), die an einer Landmaschine (100) montiert ist und dazu konfiguriert ist, eine von der Landmaschine (100) befahrene Bodenoberfläche (10) abzubilden, um als Zeitreihe erfasste Farbbilder zu erfassen, die zumindest einen Abschnitt der Bodenoberfläche (10) enthalten; sowie
eine Verarbeitungseinrichtung (122), die dazu konfiguriert ist, eine Bildverarbeitung für die als Zeitreihe erfassten Farbbilder durchzuführen, wobei die Verarbeitungseinrichtung (122) konfiguriert ist, zum:
Erzeugen, aus den als Zeitreihe erfassten Farbbildern, eines aufbereiteten Bildes (42), in dem eine Farbe einer zu erkennenden Erntegutreihe (12) hervorgehoben ist;
**dadurch gekennzeichnet, dass** die Verarbeitungseinrichtung (122) konfiguriert ist, zum:
Erzeugen, aus dem aufbereiteten Bild (42), eines Draufsichtsbildes (44), wie es von oberhalb der Bodenoberfläche (10) betrachtet wird, wobei das Draufsichtsbild (44) klassifiziert wird in erste Pixel, deren Farbindexwert für die Erntegutreihe (12) gleich oder größer als ein Schwellenwert ist, und zweite Pixel, deren Indexwert unterhalb des Schwellenwerts liegt;
Totalisieren bzw. Aufsummieren des Indexwertes der ersten Pixel entlang einer Vielzahl von Abtastlinien, die sich in jeder Richtung einer Vielzahl von Winkeln im Draufsichtsbild (44) erstrecken, um Gesamtwerte zu ermitteln;
Erzeugen eines Histogramms, in dem Positionen der Abtastlinien und die Gesamtwerte einander für jede Richtung der Vielzahl von Winkeln zugeordnet sind;
Heranziehen des Histogramms für jede Richtung der Vielzahl von Winkeln;
Bestimmen eines Winkels einer Abtastlinie, die sich in Richtung der Erntegutreihe (12) erstreckt, aus der Vielzahl der Winkel; und
Bestimmen von Positionen von Kantenlinien der Erntegutreihe (12) anhand vorbestimmter Positionen auf gegenüberliegenden Seiten eines Spitzenwerts von Gesamtwerten im Histogramm, das dem bestimmten Winkel zugeordnet ist.

2. Das Erntegutreihenerkennungssystem nach Anspruch 1, wobei die Verarbeitungseinrichtung (122) konfiguriert ist, zum:
Unterteilen des ganzen oder eines Teils des Draufsichtsbildes (44) in eine Vielzahl von Blöcken, und Bestimmen der Positionen der Kantenlinien für jeden der Vielzahl von Blöcken.

3. Das Erntegutreihenerkennungssystem nach Anspruch 2, wobei
im Draufsichtsbild (44) die Vielzahl der Blöcke die Bandformen aufweisen, die durchgehend entlang einer horizontalen Richtung im Bild oder einer vertikalen Richtung im Bild verlaufen; und
die Verarbeitungseinrichtung (122) dazu konfiguriert ist, die Kantenlinien der Erntegutreihe (12) auf der Grundlage einer Bandform in einer Richtung zu bestimmen, die sich von der Fahrtrichtung der landwirtschaftlichen Maschine (100) unterscheidet.

4. Das Erntegutreihenerkennungssystem nach Anspruch 2 oder 3, wobei, auf der Grundlage der Positionen der Kantenlinien in jedem der Vielzahl von Blöcken, die Verarbeitungseinrichtung (122) dazu konfiguriert ist, eine Richtung zu bestimmen, in der sich die Erntegutreihe (12) erstreckt.

5. Das Erntegutreihenerkennungssystem nach irgendeinem der Ansprüche von 1 bis 4, wobei
das Draufsichtsbild (44) ein Bild in senkrechter Draufsicht ist, in dem eine sich entlang der Bodenoberfläche (10) erstreckende Referenzebene direkt von oben entlang einer Normalenrichtung der Referenzebene betrachtet wird; und
die Verarbeitungseinrichtung (122) dazu konfiguriert ist, das Bild in senkrechter Draufsicht durch eine Homographie-Transformation aus den als Zeitreihe erfassten Farbbildern oder aus vorverarbeiteten Bildern der als Zeitreihe erfassten Farbbilder zu erzeugen.

6. Das Erntegutreihenerkennungssystem nach Anspruch 5, wobei die Referenzebene um einen vorbestimmten Abstand, der entsprechend den Erhebungen und Vertiefungen auf der Bodenoberfläche (10), auf der die Pflanzen angebaut werden, festgelegt wird, gegenüber den tiefsten Stellen der Erhebungen und Vertiefungen der Bodenoberfläche (10) nach oben versetzt ist.

7. Das Erntegutreihenerkennungssystem nach irgendeinem der Ansprüche von 1 bis 6, wobei die Verarbeitungseinrichtung (122) dazu konfiguriert ist, auf der Grundlage der Positionen der Kantenlinien der Erntegutreihe (12) einen Zielpfad zu erzeugen und auszugeben.

8. Eine landwirtschaftliche Maschine (100) mit dem Erntegutreihenerkennungssystem nach irgendeinem der Ansprüche von 1 bis 7, umfassend:
eine Fahrausrüstung, die ein für die Lenkung zuständiges Rad aufweist; und
eine automatische Lenkeinrichtung (124), die dazu konfiguriert ist, auf der Grundlage der vom Erntegutreihenerkennungssystem ermittelten Positionen der Kantenlinien der Erntegutreihe (12) einen Lenkwinkel des für die Lenkung zuständigen Rads zu steuern.

9. Die landwirtschaftliche Maschine (100) nach Anspruch 8, wobei, auf der Grundlage der als Zeitreihe erfassten Farbbilder, die Verarbeitungseinrichtung (122) des Erntegutreihenerkennungssystems dazu konfiguriert ist eine Positionsbeziehung zwischen den Kantenlinien der Erntegutreihe (12) und dem für die Lenkung zuständigen Rad zu überwachen, und ein Positionsfehlersignal an die automatische Lenkeinrichtung (124) zuzuführen.

10. Ein computerimplementiertes Verfahren zur Erntegutreihenerkennung, wobei das Erntegutreihenerkennungsverfahren einen Computer dazu veranlasst, Folgendes auszuführen:
Erfassen, mittels einer an einer Landmaschine (100) angebrachten Bildgebungseinrichtung (120), von als Zeitreihe erfassten Farbbildern durch Abbilden einer von der Landmaschine (100) befahrenen Bodenoberfläche (10), wobei die als Zeitreihe erfassten Farbbilder mindestens einen Abschnitt der Bodenoberfläche (10) enthalten;
Erzeugen eines aufbereiteten Bildes (42) aus den als Zeitreihe erfassten Farbbildern, in dem eine Farbe einer zu erkennenden Erntegutreihe (12) hervorgehoben ist;
Erzeugen, aus dem aufbereiteten Bild (42), eines Draufsichtbildes (44), wie es von oberhalb der Bodenoberfläche (10) betrachtet wird, wobei das Draufsichtsbild (44) klassifiziert wird in erste Pixel, deren Farbindexwert für die Erntegutreihe (12) gleich oder größer als ein Schwellenwert ist, und zweite Pixel, deren Indexwert unterhalb des Schwellenwerts liegt;
Totalisieren bzw. Aufsummieren des Indexwertes der ersten Pixel entlang einer Vielzahl von Abtastlinien, die sich in jeder Richtung einer Vielzahl von Winkeln im Draufsichtsbild (44) erstrecken, um Gesamtwerte zu ermitteln;
Erzeugen eines Histogramms, in dem Positionen der Abtastlinien und die Gesamtwerte einander für jede Richtung der Vielzahl von Winkeln zugeordnet sind;
Heranziehen des Histogramms für jede Richtung der Vielzahl von Winkeln;
Bestimmen eines Winkels einer Abtastlinie, die sich in Richtung der Erntegutreihe (12) erstreckt, aus der Vielzahl der Winkel; und Bestimmen von Positionen von Kantenlinien der Erntegutreihe (12) anhand vorbestimmter Positionen auf gegenüberliegenden Seiten eines Spitzenwerts von Gesamtwerten im Histogramm, das dem bestimmten Winkel zugeordnet ist.

## Revendications

1. Un système de détection de rangée de cultures comprenant :
un dispositif d'imagerie (120) monté sur une machine agricole (100), le dispositif d'imagerie (120) étant configuré pour imager la surface du sol (10) sur laquelle se déplace la machine agricole (100) afin d'acquérir des images couleur en série temporelle contenant au moins une portion de la surface du sol (10) ; et
un dispositif de traitement (122) configuré pour effectuer un traitement d'image sur les images couleur en série temporelle, sachant que
le dispositif de traitement (122) est configuré pour :
générer, à partir des images couleur en série temporelle, une image améliorée (42) dans laquelle la couleur d'une rangée de cultures (12) à détecter est accentuée ;
**caractérisé en ce que** le dispositif de traitement (122) est configuré pour :
générer, à partir de l'image améliorée (42), une image en vue de dessus (44) telle qu'observée depuis une position située au-dessus de la surface du sol (10), l'image en vue de dessus (44) étant classée en premiers pixels dont la valeur d'indice de couleur pour la rangée de cultures (12) est égale ou supérieure à un seuil, et en seconds pixels dont la valeur d'indice est inférieure au seuil ;
totaliser la valeur d'indice des premiers pixels le long d'une pluralité de lignes de balayage s'étendant dans chaque direction d'une pluralité d'angles dans l'image en vue de dessus (44) afin de déterminer des valeurs totales ;
générer un histogramme dans lequel des positions des lignes de balayage et les valeurs totales sont associées pour chaque direction de la pluralité d'angles ;
se référer à l'histogramme pour chaque direction parmi la pluralité d'angles ;
déterminer, parmi la pluralité d'angles, un angle d'une ligne de balayage s'étendant dans une direction de la rangée de cultures (12) ; et
déterminer des positions de lignes de bord de la rangée de cultures (12) à partir de positions prédéterminées situées de part et d'autre d'un pic des valeurs totales dans l'histogramme associé à l'angle déterminé.

2. Le système de détection de rangée de cultures d'après la revendication 1, sachant que le dispositif de traitement (122) est configuré pour :
diviser la totalité ou une partie de l'image en vue de dessus (44) en une pluralité de blocs, et déterminer les positions des lignes de bord pour chacun de la pluralité de blocs.

3. Le système de détection de rangée de cultures d'après la revendication 2, sachant que,
dans l'image en vue de dessus (44), la pluralité de blocs présente des formes en bande qui sont continues le long d'une direction horizontale dans l'image ou d'une direction verticale dans l'image ; et
le dispositif de traitement (122) est configuré pour déterminer les lignes de bord de la rangée de cultures (12) sur la base d'une forme en bande dans une direction différente de la direction de déplacement de la machine agricole (100).

4. Le système de détection de rangée de cultures d'après la revendication 2 ou 3, sachant que, sur la base des positions des lignes de bord dans chacun de la pluralité de blocs, le dispositif de traitement (122) est configuré pour déterminer une direction dans laquelle s'étend la rangée de cultures (12).

5. Le système de détection de rangée de cultures d'après l'une quelconque des revendications de 1 à 4, sachant que
l'image en vue de dessus (44) est une image vue du haut dans laquelle un plan de référence s'étendant le long de la surface du sol (10) est observé directement d'en haut selon une direction normale au plan de référence ; et
le dispositif de traitement (122) est configuré pour générer l'image en vue de dessus par transformation homographique à partir des images couleur en série temporelle ou des images prétraitées issues des images couleur en série temporelle.

6. Le système de détection de rangée de cultures d'après la revendication 5, sachant que le plan de référence est décalé vers le haut, d'une distance prédéterminée qui est définie en fonction de bosses et de creux présents sur la surface du sol (10) sur laquelle les cultures sont plantées, par rapport aux fonds des bosses et des creux de la surface du sol (10).

7. Le système de détection de rangée de cultures d'après l'une quelconque des revendications de 1 à 6, sachant que le dispositif de traitement (122) est configuré pour générer et fournir en sortie un trajet cible sur la base des positions des lignes de bord de la rangée de cultures (12).

8. Une machine agricole (100) présentant le système de détection de rangée de cultures d'après l'une quelconque des revendications de 1 à 7, comprenant :
un équipement de déplacement incluant une roue assurant la direction ; et
un dispositif de direction automatique (124) configuré pour commander l'angle de braquage de la roue assurant la direction sur la base des positions des lignes de bord de la rangée de cultures (12), telles que déterminées par le système de détection de rangées de cultures.

9. La machine agricole (100) d'après la revendication 8, sachant que, sur la base des images couleur en série temporelle, le dispositif de traitement (122) du système de détection de rangée de cultures est configuré pour surveiller une relation de position entre les lignes de bord de la rangée de cultures (12) et la roue assurant la direction, et pour fournir un signal d'erreur de position au dispositif de direction automatique (124).

10. Un procédé de détection de rangée de cultures mis en œuvre par ordinateur, le procédé de détection de rangée de cultures amenant un ordinateur à exécuter des étapes consistant à :
acquérir, à partir d'un dispositif d'imagerie (120) monté sur une machine agricole (100), des images couleur en série temporelle en imageant une surface de sol (10) sur laquelle se déplace la machine agricole (100), les images couleur en série temporelle contenant au moins une portion de la surface de sol (10) ;
générer, à partir des images couleur en série temporelle, une image améliorée (42) dans laquelle une couleur d'une rangée de cultures (12) à détecter est accentuée ;
générer, à partir de l'image améliorée (42), une image en vue de dessus (44) telle qu'observée depuis une position située au-dessus de la surface du sol (10), l'image en vue de dessus (44) étant classée en premiers pixels dont la valeur d'indice de couleur pour la rangée de cultures (12) est égale ou supérieure à un seuil, et en seconds pixels dont la valeur d'indice est inférieure au seuil ;
totaliser la valeur d'indice des premiers pixels le long d'une pluralité de lignes de balayage s'étendant dans chaque direction d'une pluralité d'angles dans l'image en vue de dessus (44) afin de déterminer des valeurs totales ;
générer un histogramme dans lequel des positions des lignes de balayage et les valeurs totales sont associées pour chaque direction de la pluralité d'angles ;
se référer à l'histogramme pour chaque direction parmi la pluralité d'angles ;
déterminer, parmi la pluralité d'angles, un angle d'une ligne de balayage s'étendant dans une direction de la rangée de cultures (12) ; et déterminer des positions de lignes de bord de la rangée de cultures (12) à partir de positions prédéterminées situées de part et d'autre d'un pic des valeurs totales dans l'histogramme associé à l'angle déterminé.
